(19) Europäisches Patentamt
European Patent Office
Office européen des brevets

(11) **EP 4 481 632 A1**

(12) **EUROPEAN PATENT APPLICATION**

(43) Date of publication:
**25.12.2024 Bulletin 2024/52**

(21) Application number: **23180497.2**

(22) Date of filing: **21.06.2023**

(51) International Patent Classification (IPC):
**G06N 5/045** *(2023.01)*     **G06N 20/00** *(2019.01)*

(52) Cooperative Patent Classification (CPC):
**G06N 5/045; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventor: **SALOMON, Andre Frank**
**Eindhoven (NL)**

(74) Representative: **Philips Intellectual Property & Standards**
**High Tech Campus 52**
**5656 AG Eindhoven (NL)**

(54) **NEURAL NETWORK ANALYZER ENABLING VISUALIZATION, OPTIMIZATION AND GENERALIZATION DE-RISKING**

(57)     System (SYS.MS) and related method for facilitating an assessment operation in relation to a trained machine learning model. The system comprises an input interface (IN) for receiving i) parameters of the trained machine learning model (M), and ii) output data producible by the trained model (M), in response to input data processable by the trained model (M). An analyzer component (AZ) computes, based on the output data, a contribution value per model parameter. The contribution value per parameter is configured to measure, given the input data, a respective contribution to the output data of the respective parameter. The contribution values form a contribution map for the trained model given the input data. The analyzer provides the contribution map for the assessment operation in relation to the trained model (M).

**FIG. 2**

**Description**

FIELD OF THE INVENTION

The invention relates to a system for facilitating an assessment operation in relation to a trained machine learning model, to an arrangement including such a system, to a related computer-implemented method for facilitating an assessment operation in relation to a trained machine learning model, to a computer program element, and to a computer readable medium.

BACKGROUND OF THE INVENTION

According to reports by the World Bank, the WHO and others, life expectancy worldwide is ever growing, despite some dips due to higher mortality rates caused by pandemics for example, such as the Spanish flu in the late 1910s, and the very recent Covid 19 pandemic. Whilst there remain differences globally, most can expect to live on into their 70s, in some richer countries even well into their 80s, such as in Japan, some parts of Europe, and the US for example. However, this may pose new challenges, in particular on the health care system in some places that need to cope with an aging population, sometimes coupled with the effects of dropping birth rates, in particular in higher income countries. Hospitals can become overwhelmed. Patients may have to wait a long time before they receive the care they need. This may affect life quality negatively.

Medical technology is one answer to this adverse trend: improved medical equipment such as better imaging devices and other sophisticated medical devices have played their part in making treatment quicker, cheaper and available to a larger number. Some such medical devices rely on computerized support. Indeed, it is often the underlying computerized infrastructures that have driven this higher efficiency in treatment and therapy. For example, computational power is harnessed to control a medical device more efficiently. Specifically, computing solutions may help medical professionals detect more reliably and quicker medical conditions. For example, screening for breast cancer, or screening medical imagery for other diseases, have become quite accurate and can deliver results within minutes. However, workload is set to increase even further, due to increasing demand and pressures on the health care system. If workload is overstretched, user fatigue may set in which can have devastating consequences for patients, for example if conditions are not diagnosed on time or not at all.

Of late, computation based aids have been developed that use machine learning ("ML") models, configured to help the medical professional achieve higher throughput, at good success and accuracy rates in diagnostic or therapeutic decision making. Such machine learning models have been trained on training data in order to enable such models to detect patterns such as signs/signatures of the presence of a medical condition, based on input data such as lab data, patient records and medical imagery or other pertinent data. To date, some of those machine learning models that are used to help in disease detection for example have remained a "black box" to many: it is not easily ascertainable why a given machine learning model reaches the conclusion it does. Also, it is often unclear what the quality of the training data was that was used to train the model. The data may have been drawing from a distribution which may have little relevance to cases in a given medical facility that that sees patients with different profiles than those whose data was used by an ML vendor to train their ML model. "Out of distribution" risks can thus arise. This can pose difficulties for medical facilities such as hospitals when wishing to acquire and use such ML-based-equipment. It is a challenge to objectively judge safety, trust and fitness for purpose of a given trained ML model.

Similar such challenges and risks are not necessarily confined to the medical realm, but may arise also in the context of other mission critical applications, such as in autonomous driving solutions in automotive, and many other domains, where machine learning models are involved in critical decision making.

Another issue may be model capacity or complexity, such as the number of parameters, complexity of architecture or features thereof, etc. In the medical domain, if ML models are used, fast decision making is often called for, such as in a trauma setting. But a too complex a model setup may incur computational overhead with latency and little benefit in terms of accuracy and veracity of output returned. However, a too simple a model may not be up to the task of capturing all the patterns and relationships relevant for a given application.

SUMMARY OF THE INVENTION

Thus, there may be a need for more efficient use for machine learning models in various settings or domains, such as medical, automotive, aerospace, pharmaceutical, processing engineering, etc.

An object of the present invention is achieved by the subject matter of the independent claims wherein further embodiments are incorporated in the dependent claims. It should be noted that the following described aspect of the invention equally applies to the computing arrangement, to the related method, to the computer program element, and to the computer readable medium.

According to a first aspect of the invention there is provided a system for facilitating an assessment operation in relation to a trained machine learning model, comprising:

an input interface capable of receiving i) one of more parameters of the trained machine learning model, and ii) output data producible by the trained model, in response to input data processable by the trained model (M), and
an analyzer component capable of computing, based on the output data, a contribution value per model parameter, wherein the said contribution value per parameter is configured to measure, given the input data, a respective contribution to the output data of the respective one of the one or more parameters,
wherein the one or more contribution values form a contribution map for the trained model given the input data, and the analyzer capable of providing the contribution map for the said assessment operation in relation to the trained model.

The assessment operation may be manifold in general relate to setup and/or performance of the model. Such assessment may include model optimization/improvement/tuning or validation, etc.

The model may have been trained for regression or classification of any other task. For example, in the medical field this may include disease detection (eg, breast cancer screening), treatment recommendation, such as dosage computation in chemo- or radiotherapy, planning, predicting best imaging settings, eg, amperages/voltages for X-ray tubes, collimation, imaging geometries (projection directions), pulse sequences of MRI, etc, or image segmentation, image registration, and so forth.

However, the principles disclosed herein are not confined to medical applications, and may include others, such as autonomous vehicles, etc. The system and method may be used in any industrial setting that relies on machine learning models that may be sourced from elsewhere (from other vendors, etc.), and where objective, reliably assessments are needed for those outside-sourced models.

In embodiments, the trained machine learning model is of the artificial neural network type. Other model types may be used instead.

In embodiments, the system may further include a visualizer component configured to generate a visualization of the contribution map on a display device.

In embodiments, the input data is part of training data or test data on which the model was trained or tested.

In embodiments, the input data is medical data including any one or more of: i) imagery, ii) laboratory data, iii) patient record.

In embodiments, the output data includes any one of more of: control data for medical equipment, diagnostic data, therapy data, segmented image data, image registration data.

In embodiments, the system is capable to so analyze the machine learning model, given a plurality of input data instances and/or related output data instances, to obtain a plurality of contribution maps, including the said contribution map, at least one such map per input data or output data instance for the said machine learning model.

In some cases, it may be sufficient to merely provide the model, an API or other means to access its parameters, and at least the input part instances of the data. The related output instances may then be generated by applying model to the input instances.

The system may include an assessor. At least three different modes or kinds of operations thereof are envisaged in embodiments. The system may use a single one, any two or all three assessors, as needed.

Thus, in some embodiments, the assessor of the system is capable to assess the trained model based on thresholding at least one contribution value in the map, or in the plurality of maps.

In other embodiments, the assessor is capable to assess, based on the thresholding, for i) a recommendation of the model to be retrained, and ii) for a recommendation to modify an architecture of the machine learning model.

Specifically, in embodiments the assessor is capable to assess an out-of-distribution risk for a new input data instance , not from among the data on which the model was trained or tested on, wherein the assessor is capable to so assess, based on comparing, in a comparison operation, the contribution map, or the plurality of contribution maps, against a new contribution map provided by the analyzer for the machine learning model given the new input data instance.

In yet other embodiments, the assessor capable to assess a compatibility of a new machine learning model tested or trained on new training or test data different from training or test data for the machine learning model, the assessor capable to so assess, based on comparing, in a comparison operation, the contribution map, or the plurality contribution maps, for the machine learning model against a new contribution map, or plurality of new contribution maps, provided by the analyzer for the machine learning model or the new machine learning model, given the new training or test data as new input data and/or output data instances.

Thus, the assessor may be used to assess for example vendor/3rd party ML models and/or data, as needed.

In embodiments, the assessor is capable of admitting, based on the assessment operation, the new machine learning model into a pool of already assessed one or more machine learning models, including the said machine learning model.

In embodiments, the system may include a clusterer capable of clustering the plurality of contribution maps into clusters. The clusterer may be part of the assessor.

In embodiments, the comparison operation is based on a clustering algorithm.

In embodiments, the system is implemented by one or more computing platforms.

In another aspect there is provided a computing arrangement, including a system of any one of the preceding claims, and at least one storage medium on which is stored at least one or more i) at least a part of the machine learning model, ii) at least a part of the new machine learning model, iii) at least a part of the training or test data of the machine learning model, or of the new machine learning model.

In yet another aspect there is provided a computer-implemented method of facilitating an assessment operation in relation to a trained machine learning model, comprising:

receiving i) one of more parameters of the trained machine learning model, and ii) output data producible by the trained model, in response to input data processable by the trained model, and

computing, based on the output data, a contribution value per model parameter, wherein the said contribution value per parameter is configured to measure, given the input data, a respective contribution to the output data of the respective one of the one or more parameters,

wherein the one or more contribution values form a contribution map for the trained model given the input data, and the analyzer capable of providing the contribution map for the said assessment operation in relation to the trained model.

In yet another aspect there is provided a computer program element, which, when being executed by at least one processing unit, is adapted to cause the processing unit to perform the method.

In yet another aspect there is provided at least one computer readable medium having stored thereon the program element of claim 18, or having stored thereon, the machine learning model and/or the test or training data on which the machine learning model was tested or trained.

In yet another aspect there is provided a use of one or more parameters a machine learning model and its test or training data to compute a contribution map as per the method above.

In an aspect there may be provided a use of one or more parameters a machine learning model and its test or training data to compute a contribution map, wherein the said contribution map includes contribution value per model parameter, wherein the said contribution value per parameter is configured to measure, given input data, a respective contribution to output data of the respective one of the one or more parameters, the input and output date being part of the test or training data.

The proposed system may use the concept of contribution maps. The contribution map concept as used herein may be thought of as a spatial version of a given ML model's parameter set. A similarity measure between such maps may be harnessed herein for various uses which facilitate assessment of such ML model(s). Thus, a contribution map(s) map is configured to map out information (the model's parameters) from "within" the model itself, as a function of instances of that model's operational data (training, test or deployment data).

For example, as envisaged herein, the proposed system may use the concept of contribution maps to quantify whether performance of a machine learning model can be improved by re-training the model on new data, or by redesigning of architecture of the model.

In addition or instead, the contribution map concept may be used herein to quantify an out-of-distribution ("OOD") risk of a given model vs new deployment data. Similarly, but in a different application, an OOD risk may be quantified for the respective operational data of a new/untrusted model (and its operational data), and operational data of the given (trusted) model. The contribution map(s) may be visualized.

The assessor may be configured herein to use the contribution map concept accordingly for the said different form of assessment mentioned, that is, optimization need, OOD risk vs new deployment data, or OOD risk for one model (trusted) against the untrusted model, based on their respective operational set, in particular their training or test data set.

What may be preferred herein in some embodiments, is to compare models that are similar in terms of the general architecture, i.e., models can be compared that are different in terms of capacity or number of layers, but the principal design is preferably similar in order to be able to compare contribution maps. For example, artificial neural network type models may be so compared as one example.

The embodiment of the assessor for assessment of re-training/redesign need of a given model may be based on a "within-map" thresholding, that is, a thresholding of contribution values that make up the map. The embodiment of the assessor for assessment of OOD risk in respect of model vs deployment data or model vs model may be based on a similarity comparison between such maps. Such comparison may also be based on thresholding, but such thresholding may take into account aspects of each map globally, as a whole.

A combination of the different embodiments of the assessor are also envisaged, wherein the assessor is user selectable to operate in any one of the said embodiments. As such however, each assessor embodiment may be used as a stand-alone feature, and either one or more may be used in isolation, without the other one or more embodiments.

The proposed system and method may afford any one, more than one, or all, of the following benefits:

- The proposed method and system may help visualize, and thus facilitate an understanding, of which parts of the model are responsible for the resulting output instance, given a specific input instance. Such visualization is otherwise usually not possible. Thus, the proposed system and method allow elucidating inner workings of the trained model, which otherwise remain a mere "black box"
- Overfilling can be identified by the visualization;
- Such overfitting can be categorized by classifying the contribution maps of the trained model into classes, such as into the said clusters or other or using other manners of classification;
- The method and system allow not only to assess whether the overall model capacity is used well, but it also enables visualization of which specific parts of the model (such as which layers of an NN-type model) do or do not lack from capacity. This insight conferred by system and method may facilitate targeted and purpose-driven modification of certain ones of the model parameter, rather than merely tweaking by guess-work random selections of parameters of the model's parameter space, and then testing such modified versions of the model (e.g. larger / smaller capacity), which is costly and cumbersome;
- Generalization capabilities can be better assessed by comparing corresponding contribution maps which e.g. can be visualized. The contribution maps allow indicate which parts of the model are used in testing or deployment, as compared to the parts that are used based on the training data;
- The system and method enables a well-defined way of assessing whether a new untrusted model is suitable and appropriately trained to process a certain input sample that might be OOD in respect of the training or testing data on which the model was trained or tested on;
- The system and method may also provide a risk value which is based on comparison between contribution maps. The risk value may indicate whether a new input deployment data instance is likely to be OOD with respect to the training or test data.

In embodiments, the system or method may perform any one, more than one, of all of the following functions:

- The proposed method may calculate for some or each parameter (eg, weights of a trained neural network) a contribution value that corresponds to that parameter's contribution to, or importance or relevance for, producing a given output instance based on a specific input instance. Accordingly, each given input instance corresponds to its own importance map, and such may be calculated herein;
- For some or each training data instance used as input, an importance map is calculated and may be compared to other one or more other maps of deployment data in order to classify for OOD risk. The contribution maps may be classified into groups or classes, based on clustering for visualization or for facilitating rapid comparison;
- The contribution map allows assessing the model capacity and allows indicating which regions of the network (i.e. network neurons) are barely used or are critical to some input data instances;
- Visualizing of some or all classified maps (eg, of their clusters) and/or its corresponding maps (from a given cluster) allows illustrate which parts of the network architecture should be e.g. increased or decreased, in terms of capacity (number of channels, neurons per layer, layers, ...);
- For deployment input, an OOD-risk value may be calculated by assessor in some embodiments, indicating whether or not the network has been trained with similar input samples drawn from similar distributions. For operation, the importance map for a new input sample is calculated and its similarity (eg, based on a distance function) to previously identified classes/clusters of maps for training samples is calculated. In case the distance is high to all or a preset proportion of instances (e.g. represents an outlier within the set of other samples of the best matching class), a notification may be issued for such OD risk, indicating that the output may be not reliable enough for e.g. clinical use or in autonomous driving. In such a case the new input sample may represent an outlier relative the set of other samples of the best matching class of contribution maps. For example, a recognition output for a road works based on camera footage captured on a motorway may raise as notification, such as a warning signal, in case the model was trained on training data that had not included sufficient instances of such road works Similar for a detection result of a medical condition, which was not represented (well) in the training data set on which the model was trained;
- A basic idea herein is that there might be training/testing data that were identified to be problematic in terms of quality and reliability. For example, during the development of the model (i.e., in training/testing phase) in autonomous driving, it may have been observed that specific classes of input (e.g. those that represent a construction site as may be encountered on a road) leads to insufficient reliability of the output. The corresponding clusters could be marked as critical so that e.g. in autonomous driving, the driver is alerted each time a construction site is picked up by the vehicle's sensor. For clinical imaging data this might be relevant e.g. for prostheses, rare anatomical input or even pediatric data that was not represented by intended use cases as per the training/test data;
- In imaging related service/ tasks, such a risk value may be calculated for some input image. In clinical settings, imagery which represents unusual anatomies that was not represented sufficiently in the training data on which the model was trained on, may thus be marked with a high risk value, if the contribution map for this input imagery does not fit well into the existing clusters of contribution maps computed for the model and its training data set.

It will be understood that the principles described herein are not necessarily confined to the medical fields. Indeed, the proposed setup can be used to improve any other computer assisted operations based on machine learning models such as may be used to control or facilitate operation of industrial facilities, production sites, manufacturing.

For example, machine learning models may be used to validate chip designs, may be used in autonomous aviation or automotive, may be used in chemical plants to control processes, or in pharmaceutical settings for drug design and others. Any of such applications and others are envisaged herein. In general application of the proposed system and method are envisaged for mission critical safety related applications where not only seamless interoperation between modules is called for, but also quality of the output of the machine learning models is of relevance.

In general, the term "*machine learning*" includes a computerized arrangement (or module) that implements a machine learning ("ML") algorithm. Some such ML algorithms operate to adjust a machine learning model, thus configuring same to perform ("learn") a task. Other ML operate direct on training data, not necessarily using such an explicit model, thus in such cases the training data may form the model, or may be part of such model. This adjusting or updating of the model is called "training". In general, task performance by the ML model may improve measurably with training experience. Training experience may include suitable training data, and exposure of the model to such data. Task performance may improve, the better the data represents the task to be learned and has sufficient variation. Such training data may be drawn from a population that reflects this variation, or may be synthetically generated, augmented etc, to ensure a large enough variation among the training sample. *"Training experience helps improve performance if the training data well represents a distribution of examples over which the final system performance is measured"*. The performance may be measured by objective tests based on output produced by the model in response to feeding the model with test data. The performance may be defined in terms of a certain error rate to be achieved for the given test data. See for example, T. M. Mitchell, "Machine Learning", page 2, section 1.1, page 6 1.2.1, McGraw-Hill, 1997.

$\{C\}$ is shorthand for $\{Cj\}$ for the set of different contribution maps $Cj$, where $j$ or other index indicates different instances or members of the set. The index "j" or others will be dropped however in the following to disencumber notation. In a similar manner, the curly brackets "{","}" will be used to indicate sets of data instances, without using an index, unless needed. Thus, notation $C$ or similar may be reference to a generic one instance of contribution map, whilst $\{C\}$ is a set of contribution maps. If it is necessary to distinguish between different instances of contribution maps, prime notation " '" or index notion $j,i$, etc may be used herein. A similar notational convention may be used herein in relation to instances of operational data, or sets thereof.

"*Operational data*" is data related to operation of an ML model. "Operational data" is an umbrella reference to any one of: i)training data, ii) test data or iii) deployment data of a ML model. Each such data (training data, test data or deployment data) includes respective in-and output. Operational data is in general a set of different instances of input $(x)$ and output $(y)$, indicated within a pair of round brackets, eg, $(x,y)$ for a generic instance of training or test data of a model M. Deployment data will in general be indicated herein using Greek letter, such as $(\alpha, \beta)$. Again, in general, no index notation is used in generic references to distinguish different instances, unless this is needed at places where such indices $i,j$, etc, or prime " ' " notation may be used. Training, testing and deployment relate to different phases of use of a ML model. First there is training phase, then testing phase and, once testing reveal satisfactory performance, there is deployment phase where the model operates in its intended use. In general, different data is used in any two of the training, testing and deployment phase.

BRIEF DESCRIPTION OF THE DRAWINGS

Exemplary embodiments of the invention will now be described with reference to the following drawings, which, unless stated otherwise, are not to scale, wherein:

Fig. 1 shows a schematic block diagram of a cloud-based computing system capable of delivering multiple services based on machine learning models;
Fig. 2 shows a block diagram of a management system as may be used to facilitate operation of the system in Fig. 1;
Fig. 3 shows an analyzer component of the management system of Fig. 2 according to one embodiment;
Fig. 4 shows an embodiment of the management system according to one embodiment;
Fig. 5 shows a block diagram of a management system according to another embodiment; and
Fig. 6 shows a flow chart of a computer-implemented method for facilitating assessment of operation of a trained machine learning model.

DETAILED DESCRIPTION OF EMBODIMENTS

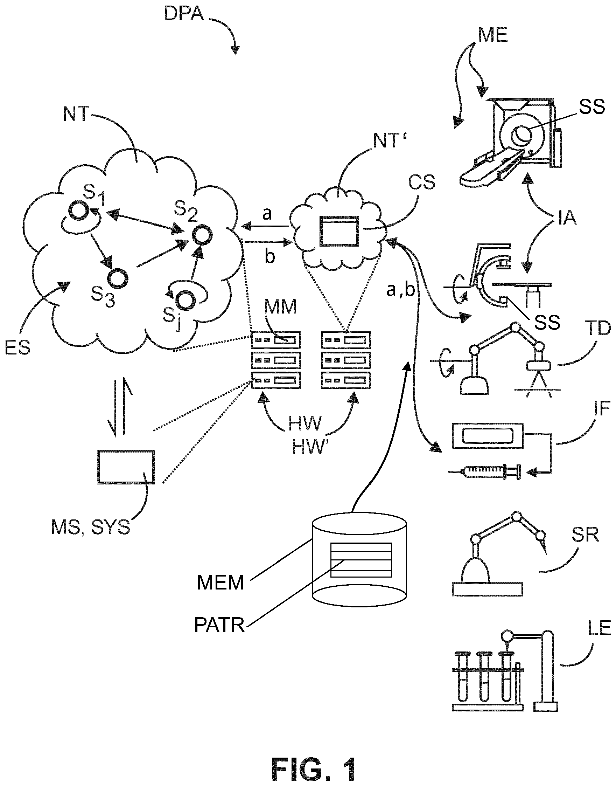

With reference to Fig. 1, this shows a block diagram of a data processing (computing) arrangement DPA, as may be used in any one of various domains such as medical, engineering, production, manufacturing and others. However, for the sake of illustration, the following will be mainly focusing on medical applications in the medical domain, but again, this is not at the exclusion of embodiments of the said other domains.

Specifically, the data processing arrangement DPA may be part of, or may be interfaceable with, a hospital information system ("HIS"), a picture archiving and communication system ("PACS"), or with any other computing infrastructure across one or more medical facilities, such as hospitals, GP practices, medical research centers, or any other.

Briefly, and as will be explained in more detail below, the arrangement DPA is envisaged to include a management system MS that is operable to facilitate consistent performance level of one or more of possibly interoperating computing services. Specifically, and in some embodiments, some such services may be based on suitably configured ("trained") machine learning ("ML") models that may have been sourced from various providers or vendors, etc. The management system MS is operable to check whether, despite their different provenances of such models, a predefined level of performance is obtainable. Such level of performance may refer to the quality of data output obtainable by such ML models, including accuracy, reliability, consistency, truthfulness, etc. Assurances or knowledge about such maintained level of performance may be an asset in mission-critical, safety related application, such as is the case in the medical domain where computing related tasks may be procured from such services to support or enable tasks such as diagnosis, therapy, planning, etc. Such or similar tasks may have a direct or indirect impact on patient health.

With continued reference to the arrangement DPA, and in more detail thereto, the data processing arrangement is preferably cloud based. In such cloud-based computing solutions, there may be one or more services S1-S3, Sj realized. Such service or services may be referred herein as "Sj" generically. In The following we will simply refer to at times to "the services Sj" for convenience, with the understanding that there may be only a single such service, and the disclosure is equally applicable to one such single service Sj.

The (one or more) services Sj may be provided in a cloud-computing network NT. The cloud computing network NT may be supported by one or more items of hardware equipment HW, such one or more servers, or any other computing device(s). Such hardware HW may include memory source(s), in which data $\alpha$ is loadable, and circuitry (processors) such as CPUs, or more dedicated processor types such as TPUs, GPUs, which process such data to produce processed data of interest $\beta$. Data $\alpha,\beta$ can be received and provided through suitable input/output interfaces, BUS systems, network interfaces, etc.

Some or each service Sj may have its own computing device, but this is not necessary as one single or multiple computing devices HW may support multiple services, the number of services in general exceeding the number of underlying, implementing, hardware HW. For example, a single hardware may be used to support multiple services, although this is rare and, more usual, multiple hardware HW items, such as servers, may be interconnected to reduce latency by load balancing or other measures to manage surges of requests for example, or to improve resilience against outages, etc.

Some or each service Sj may be implementable by suitably configured software that is run (executed) by the said one more or more items of hardware HW. That being said, purely hardware-based services are not excluded herein, and neither are "hybrid" services that are arranged in hardware and software. Each service Sj may be characterized as the computer/computing-implemented performance of a task based on input $\alpha$. The task is served by providing relevant output $\beta$.

The one or more services Sj may be requested by consumer CS, such as a client device, which may be arranged in its own cloud NT', and supported by its own hardware HW'. The two networks NT, NT' and hardware HW, HW' are shown separately for ease of exposition, and this may be indeed be so in some embodiments. However, such separation is not a necessity herein. That is, in some embodiments, there may be a single one network, so that the networks NT and NT' are identical and form a single network, supported by one or more hardware infrastructure. The client device CS may be one of the services Sj.

What is more, the services Sj may not only provide results to the task seeking consumer or client CS, but may instead, or in addition, provide their output to other one or more of the services Sj, as indicated by the arrows in cloud NT. The cloud NT may be part of the internet, an intranet or extranet, or of a local area network of a medical clinic or any other medical facility.

The client CS may be part of the or a HIS or PACS, or any other information technology system. The client CS may be configured for interfacing with one or more medical equipment, or other.

The client device CS may operate for example in an intranet NT', internet or any other wide area network WAN, but any other network infrastructure is also included herein, not necessarily based on the TCP/IP and HTTP protocols. A browser may be used by client CS to collect input data $\alpha$, and/or for requesting output data $\beta$ for the pertinent task at hand from services Sj, based on input data $\alpha$. Any one or both of networks NT, NT' may be wireless, or wired, or may be arranged as a hybrid network which includes wired and wireless components. The client device HW for client CS may be a laptop, a desktop computer, a tablet, a smart phone or any other computing device operable by a medical user such as a medical professional, a radiologist, etc.

The (one or more) consumer CS may be interfaced with one or more display devices DD (not shown) in which the input $\alpha$ and/or the service Sj-provided output $\beta$ may be visualized. Thus, the requested output data $\beta$ may be notified to user first, such as by visualization, displaying, or other. If approved by user, such data $\beta$ may then be caused by user to be forwarded to applicable equipment ME in order to effect treatment, diagnostic work, or other medical operation, as needed. Alternatively, the services Sj themselves interface with some such equipment ME in an autonomous setup. For example, the output data $\beta$ is provided to equipment(s) ME by services Sj to effect treatment, diagnostic work, or other medical operation automatically, as needed.

The client CS may be an autonomous device or service, or a user operated device/service, seeking a task to be performed by the one or more of the services Sj in cloud NT. The client CS sends out the request preferably including input data $\alpha$ which is transmitted through a network NT, N' and processed by one or more of the services Sj to deliver as result output data $\beta$. Output data $\beta$ may be sent back to the requesting client CS, or output $\beta$ may be sent to another network destination as specifiable by user CS. Although a single task may be sought by the client, one or more additional services may be involved which may exchange intermediate data in orchestrated execution of the task, until the final result is obtained which is then sent back to the client CS or other destination. The intermediate data may or may not be transferred to the client CS.

In general, the client CS requested task is preferably computational and may include for example, in the medical domain, the computation of a diagnostic result $\beta$ given medical data $\alpha$ such as imagery or lab data, patient health record or report, or any other pertinent input data $\alpha$ for which the one or more services Sj is configured processing. In addition or instead, such task may involve determining suitable control parameters $\beta$ to control medical equipment ME, such as a medical imaging apparatus IA. Such medical imaging apparatus may include any one or more of a CT (computed tomography) scanner, (magnetic resonance imaging) MRI scanner, X-ray radiography apparatus, a mammography apparatus, ultrasound (US), or any other. In such application scenarios, the control parameters may include imaging parameters such as amperage and voltage settings for an X-ray ray source SS, voltages or amperages for driving RF coils in MRI imaging equipment, etc. In addition or instead, such parameter may relate to radiation treatment or imaging planning data.

The above-mentioned various parameter(s) may be provided by the services as output $\beta$ to serve the task, or such parameter(s) may be received by service Sj as input $\alpha$ to provide other medically relevant output data $\beta'$ to so serve the task.

The medical equipment ME may include one or more medical data storage facilities MEM, such as PACS or others, in which patient records PATR are held and which may be retrieved therefrom, and passed as input $\alpha$ for processing by services Sj to produce output $\beta$.

Other medical equipment ME with which the client may be interfacing to pass on data $\beta$ obtained from the one or more services Sj, based on processing input $\alpha$ by such services Sj, may include laboratory equipment LE. The output $\beta$ provided by services Sj may include control data to control operation of such lab (laboratory) equipment LE. The lab equipment LE may include a spectrometer, automated assaying machine, or any other analytical equipment to analyze tissue sample, body fluids, etc. Alternatively or instead, input data $\alpha$ to such services Sj may include measurement data obtained by such lab equipment LE. In this case, the output $\beta$ may relate to therapy, planning or image data, based on diagnostic data $\alpha$ received at input from such lab equipment, or from medical data storage MEM in which such lab data may be held as mentioned above, etc.

Yet other medical equipment ME, with which the client CS may interface to pass on requested output date $\beta$ obtained from services Sj, may include a treatment device TD, such as a linear accelerator linac or other, for delivering radiotherapy. The requested data $\beta$ may include a treatment plan, with specifications of fractions, and/or control data for a multi-leaf collimator. Another option of treatment delivery medical equipment ME for which the client CS may be interfacing with services Sj to obtain control data $\beta$ may include a surgical robot SR. For example, based on input data $\alpha$, such as image data and/or patient record data, control or planning data $\beta$ is computed for the surgical apparatus SR. For example, the surgical robot SR may need planning data $\beta$ such as co-ordinates in order to control the surgical robot for an intervention in relation to a given patient whose data $\alpha$ has been supplied for processing by service Sj. Such planning data may instead or in addition be computed for imaging apparatus IA, so as to obtain space coordinates for the region of interest to be scanned or treated, etc. In addition or instead, the mentioned lab equipment may be in need for control parameters $\beta$ to control an assay procedure, or a procedure of any other measuring device that may support lab analytic work in a clinical or pharmaceutical setting, etc.

Other embodiments of medical equipment ME which may be served by services Sj with data $\beta$ may include an imaging facilitator device IF, such as a contrast agent pump device that is operable to release contrast agent in order to enhance contrast in imaging results.

Other types of medical equipment may include other computing devices, such as a scheduler to schedule patient appointments and follow-up appointments as often needed in a clinical facility, in particular in relation to one or more related imaging sessions, or in relation to treatment delivery appointments, such as for the various fractions in the above mentioned radiotherapy LD embodiment.

In some embodiments frequently used, the input data $\alpha$ passed on from the consumer CS for processing by the services may include image data such as X-ray or other projection imagery, reconstructed 3D volumes, patient records, including patient bio-characteristics, laboratory data with measurements or requirements. The input data $\alpha$ which is passed from the client for processing into the cloud by the services may be retrieved from any one of the medical equipment such as medical imager, or may be retrieved from storage devices, such as the mentioned PACS or from any other medical storage repositories MEM. Patient data including patient characteristics PATR such as height, weight, BMI, medical history, etc may retrieved from suitable medical databases by interfacing therewith and executing a suitable search request.

The output data $\beta$ as provided by the one or more services Sj that process such input data $\alpha$ may include in general data that facilitates clinical work to timely deliver the health care needed for patient. For example, such clinical/medical output data $\beta$ may include decision data, such as diagnostic or therapy decision data, control parameters needed to operate safely any one or more of the mentioned or other medical equipment ME in order to deliver, in an efficient and safety-managed manner, health care tasks in relation to patients.

Seamless inter-operation of services Sj may be preferable herein. This may be ensured by the management system MS that orchestrates, federates, or otherwise coordinates operation of the one or more services Sj, in order to obtain the result $\beta$ sought by the client CS. For example, the requested task may be implemented by a single or multiple services in orchestrated cooperation. The management system MS, which may itself be implemented by one or plural services supported by one or more servers or any other computing devices, may be operable to ensure suitable interfacing between two or more of the services Sj operable under such orchestration to perform the requested task. For example, the management service MS may provide interfacing information for seamless integration among services for delivering the client CS requested task. For example, the management system MS may provide API's, data reformatting, authentication or any other supporting operation that allow information to be exchanged between the services and/or with the task seeking client CS. Any suitable communication protocol and interfacing techniques may be envisaged herein for management service/system MS. Thus, the cloud NT may operate as a cloud computing setup, mainly under a "software as a service" design (SaaS), but other designs, such as one or more of web services, platform services or storage services are not excluded herein.

However, as will be explained in more detail below, the above mentioned facilitation of seamless operation and interfacing among services Sj is optional, although much preferred. What is mainly envisaged herein is for the management service MS to ensure consistency of service performance levels in connection with the task requested by the client CS. Thus, instead of, or in addition to, the infrastructural support in terms of seamless interfacing between the services mentioned above, management service MS is operable to ensure or facilitate a predefined quality level of the final output $\beta$ (and, optionally, of intermediate output(s), if any) that is provided by the services Sj. Such output data $\beta$ ought to comply with certain regulations in order to ensure meaningful and consistent task performance across service Sj and/or in respect of the medical task at hand. Such output data $\beta$ consistency is of consideration in particular in mission critical applications, such as is the case in the medical domain, where the output data, or any intermediate data, may relate to diagnostic or therapy decisions, planning data, etc. The quality of data may be determinative of a favorable health outcome for patients. If the prescribed level of service, in particular data quality level, is not maintained, this can have undesirable consequences, such as patient not receiving the care that they need, or that expensive medical equipment ME is subjected to unnecessary wear-and-tear. For example, a wrongly, unnecessarily, incompletely or otherwise deficiently conducted imaging operation due to bad data $\beta$ (such as planning or diagnostic or therapy decision data) may not only yield sub-par health results, but the imaging operation may need to be rerun. Thus, an image retake may be required, that would have been avoidable had there been good data $\beta$ in the first place. For example, the bad data may relate to wrong imaging or planning settings, wrong diagnoses, etc. Apart from being detrimental to patient health, such image retake may put unnecessary strain on components of the imaging apparatus IA, thus yielding premature breakdown or may attract otherwise unnecessary maintenance work. For example, an anode disk in an X-ray imaging apparatus IA is subjected to considerable temperature gradients which may cause this component to wear out prematurely and may be in need of replacement way before its planned lifetime, if too many retakes are needed. Similar in other imaging modalities, for example, in an MRI apparatus, where coils and their fixtures are subjected to considerable Lorentz forces, caused by the large magnetic field strengths and rapidly changing coil currents that are needed to operate such imaging modality. It is also treatment delivery devices TD that may suffer from premature wear-and-tear defects due to bad data $\beta$ as may be provided by the service Sj, if it wasn't for the proposed management system MS.

In order to explain operation of the proposed management system MS in more detail, some further context may be needed first. Some of the mentioned services Sj may use trained machine learning ("ML") models M in order to perform the task needed. Some such models M may include for example artificial neural networks, as will be explained in more detail below. The machine learning model may have been trained on training data, and may have been tested on test data before they can be used in the cloud computing service NT. For example, the machine learning model M may have been trained to process patient imagery, such x-ray or magnetic resonance imagery, in order to detect the presence of one or more diseases. In short, one such model M which implements a diagnostic service Sj, may have been trained to perform a diagnostic task to obtain a diagnostic result $\beta$. Such result $\beta$ which may be one example of a result that may be requested by client CS. Alternatively, this diagnostic result may be intermediate data as it may be fed into another machine learning model of another one of the services in order to compute control parameters, such as a treatment plan, for radiation therapy, based on the computed diagnostic result. Such treatment plan may include a set of parameters that may be applied to the linac in order to irradiate the diseased site from suitable angles at appropriate radiation doses for example. In this example, it can be seen that both instances of output data $\beta$, the diagnostic result and control parameters (treatment plan) for treatment delivery apparatus TD are mission critical. Thus, preferably, the output $\beta$ so provided based on one or more trained machine learning models M ought to be meaningful, truthful, valid and accurate. Otherwise, there may be sub-par health care results, and/or medical equipment ME is unnecessarily subjected to wear-and-tear as explained earlier.

The cloud computing network NT may support an eco-system ES of prior approved or validated services Sj, and it is only such approved or validated services Sj that are allowed to be present in the echo system ES. That is, only such services are useable by the client CS to so ensure requisite performance level. If machine learning models are used in implementing any one or more of the services, it ought to be assured that the said one or more machine learning models are up to the task and operate at a requisite minimum performance level. In other words, the quality of the output data provided by such trained machine learning models ought to be of a predefined quality. The proposed management system is configured herein to be capable to facilitate adherence to a given data quality level, in particular when new services S' based on new trained machine learning models are to be added to an existing eco-system ES of one or more service Sj and their one or more models M.

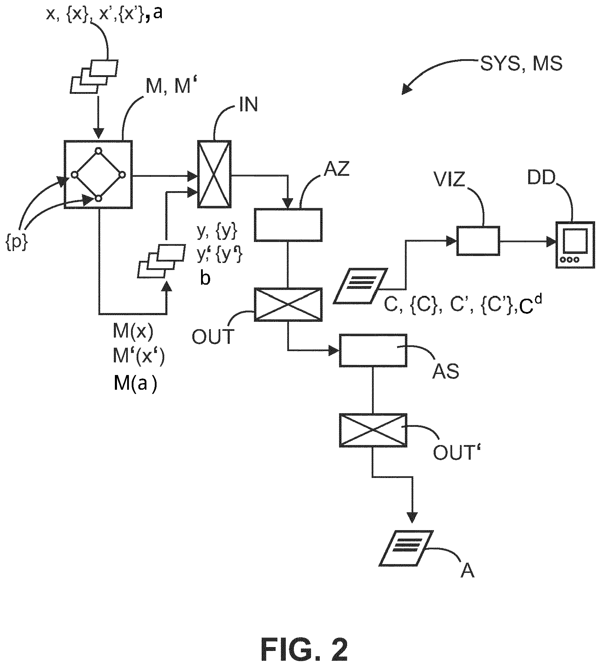

Whilst operation of the management system MS is mainly explained in the context of cloud-computing using services Sj, this is not a necessity herein, as the management system MS can used in any computational setup that use machine learning models, and where there is a need to manage performance levels of such models in terms of output data quality (such as data veracity, accuracy, medical indication / appropriateness in relation to the task at hand, ect). Operation of the management service/system MS may now be explained in more detail with reference to Fig. 2, which illustrates a block diagram thereof.

In order to ensure or facilitate such performance level, different embodiments of the management service/system MS are envisaged herein. For example, in one embodiment the management service operates as a validator to ensure that only certain approved machine learning models are admitted to the pool or eco-system ES of prior validated services using ML models M. Thus, in such embodiments, the management service/system MS has a watchdog or guardian function. Other functions of the management system MS are also envisaged herein in addition or instead, such as visualizing performance levels or modes of a given machine learning model. In yet another embodiment, the management service/system MS is configured to facilitate tuning existing trained machine learning models as may be found in an eco-system of ML models.

Embodiments of the management system MS may use the concept of contribution maps C, as will be now explained in more detail below.

Turning first to the embodiment of MS as a trust validator, or trust watchdog in more detail, it should be understood that the services Sj, in particular their underlying machine learning model M=Mj, may have been manufactured, in particular trained, by different vendors. It is therefore useful for a given medical facility that maintains such an eco system MS of models Mj to ensure a uniform performance level, in particular a consistency of quality of output data $\beta$ as may be provided by such models.

Leaving at present questions on model architecture aside, output data quality, and thus in particular performance of trained machine learning models, are in general a function of the quality of the training data or test data used for that given model. The training data can be understood as statistical samples drawn from an underlying distribution which is usually unknown. For example, if the model is trained to detect a certain disease, such as lung cancer, ML model manufacturer may have used related historical imagery to train the model. Some of which historical imagery may represent such a disease, whilst other such imagery may not, so that the model learns to discriminate between such instances. More generally, the training data is preferably chosen to represent the absence or manifestation of a medical configuration of interest (such as a disease, etc), in relation to the task of interest (for example diagnostics).

Training data or test data may be thought to comprise various instances, such as the said samples. For example, the training or test data may include various instances of image data such as chest X-rays, acquired in the past of multiple patients. The test data ought to be chosen that is it is varied enough for the medical configuration of interest and represents a sufficient number of variants of the configuration of interest that may be encountered during medical practice.

If, for the intended task for which a model is to be trained, the training data is sourced as a representative sample of underlying population, in particular with suitable variation of the manner in which positive and negative instances are represented, it can be expected that the model trained on such training data will be able to generalize well in deployment when processing data that it encounters during medical practice. This data $\alpha$ (see Fig. 1) is generally not the training data or not the test data used to train and test the model, and still, the model can be expected to be able to reliably detect the presence or absence of a given disease. However, if the training data is not so chosen by manufacturer, the model trained on such data may not be able to generalize well to deployment input data $\alpha$ to which the model has not been previously exposed to. For example, if a model is to be trained for detecting lung cancer, and if the test imagery (such as chest X-ray) are drawn from patients from a rural area only, then the model may not operate satisfactorily when it is used in a more urban environment where patients may be subjected to a higher level of pollution for example and lung disease may be more prevalent, in many variants, not seen by the "rural" model.

As such, when a decision is to be made to admit a machine learning model provided by a third party vendor/manufacturer, it may not be immediately clear whether the model has been trained on a suitably drawn and varied training data set. The proposed management system MS allows validating such a new model, based on the mentioned contribution maps. The contribution maps may be computed for a known machine learning model, and a new model. The known machine learning model is assumed to have been trained on a suitably drawn and varied training the data set. Comparing the contribution maps for the known, "trusted" model, trained on good/trusted training data, with those of the new model allows establishing, in particular checking, whether the new model M' is equally trustworthy. Thus, the management system MS may be used for generalization de-risking in respect of a given as yet unknown machine learning model M', that is one, whose performance is not trusted yet. The management system MA allows objectively quantifying and rationalizing such generalization de-risking.

Broadly, given a trusted machine learning model M, contribution maps C may be computed by the management system MS for this model. The contribution maps are computed based on the training data and/or test data that was used to train/test the model M. Thus, what is required herein for operation of management model MS, is the model M, and the test or training data $\{x,y\}$) used to train/test the model M. Thus, once data $(M, \{x,y\})$ and $(M', \{x',y'\})$ are given, the contribution maps $C,C'$ for the two model M,M' can be computed by the management system MS to perform the above mentioned trust check/validation. Any many cases, the contribution maps of the known model have been computed beforehand any may be stored for later use, when the model M's is procured. The new maps C' for the new model M' may then be computed and compared with the stored maps C of the trusted model. The primed notation M' will be use to indicated the new, as yet untrusted model, and $\{x,y\}$ will be used as training or test data for the trusted model M, whilst $\{x',y'\}$ indicates training or test data for the new, (as yet) untrusted model M'. Exactly as described above for the trusted model M, contribution maps C' of the new, as yet untrusted, model M' may be computed, but based on the underlying test or training data $\{x',y'\}$) for the new model M'. Whilst the above and below mainly explains operation of management system MS in terms of training data, the exact some operations in terms of contribution maps is of equal application to test data. Thus, contribution maps for test data may be computed in addition to, or instead, of the contribution maps of the training data, if needed.

Broadly, the contribution maps C may be thought to represent the distribution from which the training data or test data was drawn from. The training data or test data is the data on which the model was trained or tested on. The contribution map may also be thought to represent the variation of the training or test data set and/or may represent a feature of the distribution from which the test or training data was drawn.

Contribution maps C' of the new, as yet untrusted, model M' to be admitted into the eco-system ES, may be compared to contribution maps C of the trusted or otherwise given, known good, model M already in eco-system ES. Such a contribution maps-based comparison may form the basis for a decision whether or not to admit the new model M' into the eco system ES. Thus, a decision can be made whether or not the new model M' can be expected to generalize well for the tasks at hand, given the data on which the new model M' was tested or trained on.

Specifically, it can be so quantified whether the new ML model M' can be expected to reliably process data having a character that is similar to the data on which the already approved model M was trained on. In other words still, it can be quantified whether the training or test data {x,y},{x',y'}for the two models M',M can be considered to be samples drawn from the same underlying distribution, or at least whether the two sets of training or test data {x,y},{x',y'}have the same or similar level of variation. If they can be so considered, or if they are similarly varied, a consistency in performance level/output data quality can be expected, and new model M' may be admitted into the eco-system ES. In this manner, such eco-system ES of reliable, trusted models M,M' may be built up. When the training or test data {x,y},{x',y'} can be said to drawn from the same underlying distribution, it may be said that the sets (and their respective models M',M) are "in-distribution" (ID). Otherwise, the situation may be called out-of-distribution (OOD). If the models are OOD, there is a risk for lack of generalization for the new model M'. The two situations, ID and OOD, can be distinguished by using the proposed contribution map based comparison. In particular, an OOD situation can be detected and flagged, for example by notification of user, to bring such OOD finding to the attention of user. The new model M' may thus be not trusted. If on the other hand ID is detected, new model M' may be trusted and admitted into the maintained eco system EC of trusted services.

Other uses of the contribution map in terms of visualization of operation of a given model M ,M', or of fine-tuning of existing model M,M', will be discussed below in more detail.

With yet more detailed reference to Fig. 2, the management system MS may include one or more input interfaces IN, through which is receivable instances {x,y} of input data x, and respectively associated output data $y=M(x)$. In general, notation $(x,y)$ may be used herein for training or test input data instance $(x)$ and associated training or test output data $(y=M(x))$. Thus, output data instance $y$ is the output of model M, given training or test input data instance x processed by model M. If a distinction needs to be drawn, this will be indicated specifically by referring to either test or training data, respectively in the circumstance. It may be sufficient to merely provide to management system MS at input interface IN, model $M$ and $x$, as output data instance $y$ can be computed by applying $M$ to $x$, $M(x) = y$. A similar (primed " ' ") notation is use herein for untrusted model M' and its instances of training or test input $x'$/output data $y' = M'(x')$.

The machine learning model is preferably of the parameterized typed that is it includes a set of parameters $\theta$, previously adjusted in a training phase of model M by a training algorithm, based on the training data. The test data is used after training for assessing the performance of the model in terms of accuracy.

The input interface IN is preferably suitable to access individually the adjusted parameters $p \in \theta$ of the trained model $M^\theta$, such as the weights in an artificial neural network, as will be explained in more detail below.

Parameters $p$ of the model so accessed may be passed to an analyzer AZ of management system MS. The analyzer AZ analyses the set $\theta$ of parameters per parameter $p \in \theta$, in conjunction with a given training input instance x and training output instance y of the model. Thus, the said analysis for a given parameter $p$ is done per training or test data instance pair $(x,y)$. The new model M', in particular its parameters, and its training or test data $(x',y')$ are analyzed in a similar fashion. Thus, analyzer AZ outputs for each given instance of input/output training or test data, respective contribution map C when processing some of each parameter p. The contribution map C is a per parameter data structure, such as a vector, matrix or volume matrix (tensor) such as 3D or higher dimensional matrix. Each entry of map C corresponds to one of the model parameters p of the analyzer model M or M', respectively. The contribution map C broadly measures or quantifies the contribution that a given parameter of the trained model makes to a given model output y= M(x), given input x applied to such the model M. Thus, if multiple instances of input/output data pairs{(x,y)}are so processed as indeed envisaged herein, multiple contribution maps are obtained, one such contribution map for each input and output data pair instance $(x,y)$. Instances $(x,y)$ may be either the training or test data. Thus, there may be set of contribution maps for training data and test data, respectively. Processing for contribution maps for training data is preferred herein, whilst such processing for test data is optional. Analyzer AZ provides though output interface OUT the contribution maps for further processing.

For example, a given contribution map C, or the set of such maps {C}, for model M, may be optionally visualized by a visualizer VIZ on a display device DD. This allows visualizing the character of the training or test data. Contribution maps may be color-coded for example to indicate which parameters are more important (that is, make a higher contribution) in producing the respective output instance y, given input instance x, for the given task on which the model was trained. For example, hot spots can be identified in this manner, where the entries in the contribution map vary with color according to contribution of the given parameter.

In addition of, or instead of such or other visualization, an assessor AS of management MS system may assess the one or more contribution maps, and an assessment result $A$ may then be output through output interface OUT'. The assessor AS may be supported/implemented in its function by hardware HW's processor (not shown) and storage media MEM, such as primary or secondary memory on which at least a part of the model M is stored. In particular at least a part of the model's parameter set $\theta$ is so stored. Storage medium may itself be distributed in the NT or another cloud. Thus, some parameters or architecture aspects/components of the model M may be stored on one such storage medium, whilst at least one other such part is stored on at least one or more other storage medium.

As will explained in more detail below, the assessor AS's output result A may facilitate more efficient and trusted operation or use of machine learning model M. The said result $A$ may be one of an indication for a needed machine learning model tuning or an indication on an OOD risk (risk value).

For example, on one embodiment, the assessor AS may compare the two sets of contribution maps {C}, {C'} for the trusted and untrusted models M' M. The comparison may be based on a clustering of the known maps {C}. The clustering may use a distance function $D$ which allows computing a distance or similarity of one or more of the new map C's against the clusters {U} ( a set of sets) defined in the trusted set {C} of maps by a clustering algorithm.

As mentioned earlier, comparing the two sets of contribution maps {C}, {C'} for the trusted and new (as yet untrusted) models M' M for OOD risk is one application envisaged herein in embodiment. In addition or instead to the above OOD risk for two models M,M', the assessor AS may be used in another embodiment to asses OOD risk for a given model M during deployment. Thus, in this embodiment, assessor AS may also be used in embodiments to assess OOD risk in relation to a given M, without regard to another such model M'. For example, an out of distribution ("OOD")-risk may be established for any deployment data $\alpha$ encountered by model M during deployment. A contribution map $C^d$ may be computed for deployment data for some or each instance $(\alpha,\beta)$ of deployment data, exactly as described above (and as will be detailed below) for training or test data (x.y). "Deployment" as used herein indicates the use of an approved model M in its intended domain, eg as part of the eco system ES, such as in actual clinical practice. For example, model M may be requested by client CS for image-based detection of disease or conditions for given patients, whose data the model M has not processed before, or based on new imagery of a "known" patient, etc. In this in-deployment use of manager system MS for OOD risk detection, assessor AS compares distribution map for deployment data $C^d$ against one or more maps C for the test or training data of the model M. Again, clustering may be used. If there is no similarity, the deployment data $\alpha$ is deemed OOD for the model. An alert signal, eg visual, audio, haptic, text/sign message, or any other, may be issued to notify user that result β cannot be trusted. The OOD output β may not be sent back to client CS or user in his case, or the output β may still be so sent back, but with a caveat or warning note, such as the said message, informing user of OOD risk, and that care need ought to be taken when using and interpreting result β. User may then decide to review the output β data in more detail before any clinical onward use. Eg, user may decide to feed the related input data α into another model to seek another output, or user may make arrangements to have the task otherwise resolved, such as manually, and/or in consultation with a more senior user, etc. If there is similarity, thus, if there is an ID situation, the result β can be trusted and may be forwarded to client CS, etc for such onward clinical use.

Thus, the proposed manager system MS may use contribution maps-based comparison for OOD risk detection in respect of trusted and (as yet)untrusted models M,M' (and their underlying respective training or test data), or for OOD risk detection of a given, one model M in respect of deployment data. The two application scenarios may be briefly referred to herein as model vs model OOD risk detection or OOD risk detection in deployment, respectively. The model vs model OOD risk detection may be done based on the training data or the test data. For model vs model OOD risk detection, processing of the two data categories (ie. test and training data) should preferably not be mixed, and each category should be treated separately as per the above. Thus, OOD risk assessment by manager MS may be done for either test or training data, or, if needed, can be done for both, but each separately. If both are done, and an OOD risk is found in either processing, the model may be deemed not trusted and a recommendation not to admit model M' in the approved eco system ES may be issued as a message to user.

In general then, the management system MS configured for OOD risk detection based on contribution map comparison as proposed herein, may thus be thought to be operable in two phases: a prior set up phase and a later operational phase. The system MS may re-renter one setup phase repeatedly, as needed or such setup phase is a one-off. In the set up phase, the "reference" set of contribution maps {C} for the trusted ML model M based on the underlying training or test data {(x,y)} for the trusted mode M is drawn up, as described above. Optionally, as part of the setup phase, based on the operation of the intended comparison operation, a clustering of the set {C} may be done using a distance function D. Any other comparison setup may be used instead or in addition to clustering, such as principal components, statistical approaches, or indeed assessor AS may itself be ML model, trained for such comparison, etc. Then, once the set up phase concluded, one or more contribution maps C' in respect of the new model M' or in respect of an instance of deployment data (α,β) may be computed, and compared with the set of reference map(s), depending on whether model vs model OOD risk detection or model vs model OOD risk detection or OOD risk detection in deployment is intended. Either one mode of OOD risk detection may be used by manager MS. The user may configure manager MS accordingly.

In general, in the model vs model OOD risk detection, the comparison operation may be done for some or each new contribution map C' of untrusted model, M', against the reference set of contribution maps {C} for the trusted ML model M. If a given fraction (eg, a set percentage p%) of the new contribution maps {C'} of maps are found similar to the maps C in the reference set of contribution maps {C}, the new model M' may be deemed trusted and there is an ID situation. Otherwise, an OOD situation is said to have been established, and model is deemed not trusted. If trusted, model M may be admitted into the eco system. But if model M's is found not trusted, model M' is not so admitted, or a recommendation notification to this effect is issued by manager MS over the network NT to user CS. User may or may not override the recommendation, as required or as per applicable trust & safety policy at user's CS facility. When a distance measure D is used in clustering or in other embodiments of similarity-based comparison, a thresholding $T$ may be done to establish a sufficient level of similarity for each comparison. Such a similarity check policy based on fraction p% of similar contribution maps and thresholding $T$ may also be used in the OOD risk detection in deployment embodiment. The similarity value may be mapped to a score which is indicative of the OOD risk. In another embodiments, the similarity value itself may be provided as a risk score. The scoring may be done in addition to the thresholding.

The OOD risk may be binary ("yes risk"/"no risk"), if the underlying cluster maps are well separated into disjoint clusters. If here are overlaps between clusters, a continuous risk value 6 [0,1] rather than a binary one may be more appropriate. The amount of overlap may be used to map the risk into the unit interval to obtain the risk value. Thus, in this case, the distance will need to be averaged or otherwise combined into the risk value, based on the amount of overlap for example.

In general, when comparing models M,M', the known and trusted vs the new und untrusted, there is an assumption that the two models M,M' are similar in terms of the general architecture, i.e., models can be compared that are different in terms of capacity or number of layers, but the principle design should be similar so that the contribution maps C,C' are comparable. The size of the maps may differ, in which case scaling may be used, or the smaller size is chosen, with a random sampling of parameters from the larger model. If the principle architectures of C and C' are different, the proposed setup one still be used, for example by comparing various statistical measures, such as e.g. redundancy, the number of relevant clusters the network has been trained on for example, or any other. As will be appreciated, this question of comparability does not arise when checking a given model for OOD vs a new data set (training or testing) or vs new deployment data, which can always be done.

In addition or instead of using the contribution maps for OOD detection, the contribution maps may be used to suggest re-training a model if not all parameters are used. In addition or instead, a suggestion to modify an architecture of a trusted or as yet untrusted model may be modified, based on pattern or structure of the set of respective contribution maps {C}. Regions of parameters of low contribution can be established across some or all contribution maps. For example, a smaller architecture with fewer connections or layers may be suggested, if it turns out that sizeable portions of the parameters indeed made no contribution to the output data. This allows improving computational responsiveness and thus "tuning", models in a given eco system EC to return their outputs faster. This can be an asset in busy clinical facilities, where fast decision making may be called for at times.

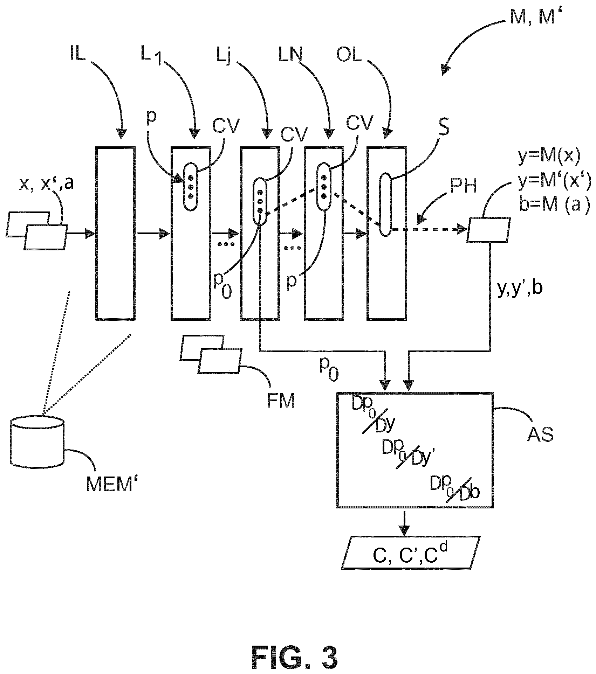

Reference is now made to the block diagram of Fig. 3, in order to provide more details on operation of analyzer AZ. However, before doing so, some further terminology and notation will be introduced first to aid said explanation.

The training data or test data $(x,y)$, $(x',y')$ will be collectively referred to as "operational data" of model M,M', respectively. Thus, "operational data" can be either test data or training data for the trusted model M or the (as yet) untrusted model M'. We will drop the "as yet" in the following and will simply refer to such a model M' as untrusted one, prior to its admittance by manager MS into the eco system ES, after which the earlier untrusted model is deemed a trusted one. The admittance of the model M' is based on contribution maps C,C'. as computed by analyzer AS. How analyzer AZ may compute contribution maps C,C', $C^d$, is now explained in more detail with continued reference to Fig. 3.

The operational data of the trusted model M is in general different from the operational data of the untrusted model M'. As this is a statement on sets, this may include the possibility that there is zero intersection between the set $\{x,y\}$ of operational data of the known model M, and the set $\{x',y'\}$ of operational data of the unknown model M'. However, such disjointness of the two sets is not a necessity herein, as a certain fraction of the said operational data sets may be identical. Indeed, this may be expected as vendors may well take recourse to the same training data to train their models. Of course, if the two operational data set are identical (are the same), the question of being OOD cannot arise. They must be ID by definition. The situation of in interest herein rises only if the two operational data sets are different by a certain amount, say Q%. Q may be for example 20, 30 or more, such as at least 50%. If there is a difference of at least Q%, Q >0, the models M, M' may or may not be OOD.

Thus, with the proposed concept of contribution maps it can be established whether the operational data sets $\{x, y\}, \{x',y'\}$ have been drawn from the same underlying distribution, even if the two sets ostensibly differ. If yes, then the model M' can be trusted, and can be admitted to the echo system. If the sets are not drawn from the same or similar distribution as revealed by comparing the contribution maps C. C', the models *M,M'* are deemed OOD, and this finding may be flagged up and brought to the attention of the user. Model M' may thus remain untrusted and may not be admitted in to the eco system. A retraining on more ID data may be required for example.

In the following explains of operation of the analyzer AZ, reference is mainly made to the operational data *(x,y)* of the known/trusted model M'. However, this is for illustration only and the exact same procedures of computing relevant contribution maps C', $C^d$ will be applicable also to operational data $(x', y')$ of the new/untrusted model *M'*, and to the deployment data $(\alpha,\beta)$ as may be encountered during deployment of the or any given trusted model M.

As illustrated in Fig. 3, machine learning model M can be conceptualized as a function or mapping $M^\theta$, which maps training input x to a training output $M^\theta(x)$. When properly trained, as assumed herein, the output may equal, within a margin, the target y associated with training input x. When applied in deployment, the output $M(\alpha) = \beta$ is assumed to be a truthful estimate for the task at hand, provided the training data has been chosen well beforehand, as mentioned earlier.

The model is parameterized which is indicated by generic parameter set $\theta$. The parameters set $\theta$ of model M may have been obtained previously by training the model M on the training data. Optionally, the trained model may have been tested on test data to test whether the trained model works satisfactorily. As previously mentioned, training is the process of adjusting an initial set of parameters based on the training data: that is, the parameters are adjusted, so that the output M(x) of the model matches within a pre-defined deviation margin the associated target *y*. The training process may be driven by a cost function or utility function, generally referred to as objective function. The objective function may be configured to measure the said deviation margin, if any. Based on the output of the objective function, a numerical optimization technique, such as backpropagation or other gradient/stochastic gradient-based techniques may be used to steer the adjustment of an initial or current set of parameters, based on the cost function output. The cost function is generally real-valued. Multiple, preferably all, training data instances *(x,y)* are used to adjust the parameters in one or more iterations until a stopping condition is met, at which point the model is deemed trained and the parameter set $\theta$ is obtained, and such is assumed herein for model M or for the other model M'. Training data may be fed into the models in batches, that is in sets, rather than considering each training data instance one by one.

In yet more detail, Fig. 3 shows a schematic block diagram of a particular type of model which is envisaged herein in preferred embodiments. This model may be of the artificial neural network (NN) type. Such models include computational nodes (not shown) arranged in a cascaded fashion in different layers IL, ... , Lj, ... , OL. The NN model may be of the convolutional NN type (CNN), as shown in Fig. 3. Thus, some or each node or layer may use a convolutional operator CV, also referred to as convolutional filter.

Each such filter CV may be made up from filter coefficients (a set of numbers). The filter coefficients may form the set of the parameters $\theta$ of the model to be adjusted in the training. The parameters may include additional numbers, such as bias terms etc. Each node may apply in addition a (gradual, preferably continuous) activation function, such as softmax, RELUs, or any other, to so define its output data, intended as input data for a node in the next layer, as so forth. Such outputs form the feature maps FM, and these are thus cascaded. The activation map may be applied to the output of the convolutional operators at the respective node. The width of each convolutional layer (the number of its coefficients) define the receptive field. The receptive field generally grows with depth. The said depth may refer to the number of hidden layers, that is, the number of layers if nodes in between input and output layer.

In general, the input data is received at the input layer IL and this is then propagated through different layers Lj by passing intermittent output of one layer as input to the next layer. The said feature maps FM are produced this way which are then combined in the output layer OL by a combined operation $\Sigma$ for example. Network may be fully convolutional or be connected or may be hybrid model such as some of the layers are convolutional whilst others such as the output layer is fully connected. The model may be stored in memory MEM', primary or secondary, for example of computing hardware(s) which implement the respective service Sj. For establishing contribution maps, that is, measuring the contribution for each considered pair of training data instances (x, y), different methods can be employed to achieve this. Building up the contribution map C may be done as follows.

If for a given training data instance (*x, y*), this is held fixed, and given a parameter p0 is subjected to variation (perturbances), the model M becomes a function of $\theta$, $F_{x,y}(p \in \theta) = M^p(x) = y$. The function *F* so defined may be referred to herein as the "auxiliary function". The analyzer AZ is broadly operative to establish, given a training data instance (x,y) and a given parameter $p \in \theta$, how this parameter p contributes to the output data y, given input x. The contribution *s* of *p* may thus be based on a perturbation analysis of *F*, such $s = \Delta(F(p))/\Delta p$ (see below at (1) ), where s is a contribution measure for p, such as numerical condition number or sensitivity or by any other error analysis method. For example, the higher the sensitivity s, the more important the considered parameter is deemed to be for the given *p* at output *y*.

Fig. 3 illustrates this perturbation analysis of auxiliary function F by a processing path PH, extending from the given parameter position *p0* (that is being perturbed) "within" the model architecture, to associated output $\Delta y$ at output data *y*. For example, for convolutional NN models, the dependency path PH may be within the receptive field of the model. If a new parameter position p0' (not shown) is considered in the next iteration, there will be different path, with different variation pattern $\Delta y$ in response to perturbations at that new position p0', and so forth. And if a new operational data pair *(x,y)* is considered, there will be again a new $\Delta p0$ vs $\Delta y$ variation pattern, even if the previous parameter position *p0* is revisited. Thus, it follows that a whole collection $\{C = C^{x,y}\}$ of contribution maps is generated as analyzer AZ loops over the instances of operational data pairs in set $\{(x,y)\}$. Forward-propagation or other gradient based numerical techniques may be used to establish the response $\Delta y$ caused by $\Delta p$ in the perturbation analysis.

Incremental variations/perturbation at suitable step-width over $p\Delta$ may be compared to associated variations $\Delta y$ at model output, caused by the so varying parameter p:

$$\Delta F/\Delta p = \Delta y/\Delta p \qquad (1)$$

Thus, the model is re-applied to input x for each perturbed parameter $\Delta p$ to obtain the associated output $\Delta y$ as response of the model $M^{\theta \ni \Delta p}(x)$ to such perturbance $\Delta p$. If there is no, or only little relative see perturbance $\Delta y$ (see eq (1)), the parameter p may be said to have little contribution to model output. If there is large (relative) perturbation $\Delta y$ as per (1), the parameter p may be said to have large(r) contribution to model output. The perturbation $\Delta y$ may call for a suitably configured difference measure/function in output space y EY. Perturbations in parameter space $\theta \ni p$ may be sampled in a two-sided manner. Thus, perturbations may be applied to either side of p, such as to make p smaller and larger at times. One sided perturbances such as to make p either smaller or larger are also envisaged. Two-sided perturbance sampling may be more robust. For yet better robustness, multiple variations may be applied to parameter p to obtain multiple *k* ratios $s_k = \Delta_k F/\Delta_k p$, The multiple ratios/contribution values s may be combined such as averaged to obtain one single well defined value *s* per considered parameter position p. This variation procedure may be repeated for some or all parameters $p \in \theta$, to so build up the map *C* = [s(p)], for some or all parameters $p \in \theta$ of trained model *M*. Thus, each entry *s(p)* in map *C* corresponds to the contribution value *s* for a given parameter *p*, and this is done over some or all parameters $p \in \theta$. A normalization may be done, such as through division of all values s by the maximum contribution value $s_{max}$ recorded. Any other normalization scheme may be used instead. Normalization allows for better cross-map comparison.

From the construction of $s = F_{x,y}(\theta)$ it can be seen that each training data instance (x, *y*) gives rise to its own, in general different, contribution map $\{C_{x,y}\}$. Thus, the number $|\{C_{x,y}\}|$ of contribution maps corresponds in general to the number of training data instances $|\{(x,y)\}|$ considered. Preferably, all training data instances (x, *y*) that were used to train the model M are considered. Thus, it will become apparent that the contribution of a given parameter may differ from contribution map to contribution map. The model M may include a large number of parameters, and thus map C may have that many entries.

The contribution map *C* can thus be seen as a data collection of entries/values, in particular the said contribution values $s(p)_{p \in \theta}$. The collection may in general inherit structure, in particular dimensionality, of the model's M parameters set $\theta$.

Thus, the contribution map $C$ may have high dimensional structure, with entries that correspond to the number of model parameters in set $\theta$. Preferably, each parameter of the model is considered and has a particular entry encoded into the contribution map. However, this may be computationally demanding and not feasible due to time, memory or CPU constraints. Therefore, in some embodiments, a lumped model may be considered, where some parameters are lumped together such as combined and it is those combined parameters whose sensitivity or contribution value $s$ is then measured by analyzer AZ. Thus, the analyzer AZ may comprise, for example as a pre-processor, a lumper, that carves up the original set of parameters into a more coarse-grained, hence lumped, parameter set, for which the contribution map C is then drawn up as described, instead of for the larger parameter set. The parameters themselves are in general numbers, whilst the output y may or may not be a number. However, for present purposes this is not a necessity herein, as it suffices herein for output y of the model M's operational data instance to be an element of a vector space $Y$. Thus, this allows defining incremental changes $\Delta y$, observed in response to perturbations at each considered parameter position p in auxiliary function F as mentioned above. The vector space is preferably normed, so that (1) is well defined, as the $\Delta y$ can be mapped to number, which allows forming the ratios (1).

If output y is not a in vector space Y, an encoder post-processing setup (not shown) may be used to embed or otherwise map outputs y into a suitable such vector space, and (1) may then be computed based on such mapped-into elements, instead of the original outputs y. The vector space Y is preferable normed and $\Delta y$ may thus be defined as the norm of the relevant difference vector $\Delta y$.

For example, depending on the task for which the model was trained, the output y may be itself an image, such as a segmentation image or mask, a segmentation map etc. This and other types of image like outputs may be conceptualized as elements of a normed vector space, and a difference function/measure can be defined, for example, as a Euclidean distance or other. Thus, the variation $\Delta y$ for output y experienced in response to the perturbation $\Delta p$ applied at parameter p is well defined, and so are the respective contribution value s.

In some embodiments, the model may be a classifier model instead of a regression type model as in some types of segmentation examples. In this case, again, a suitable difference measure may need to be defined for the output. For example, the different categories or classification bins can be represented by a vector with each entry representing a different classification class. Again, in this embodiment, a Euclidean distance may be used to define a difference measure in the target space y. Similar to when the classification outputs y are probability distributions over such bins. Stochastic distance may be defined, or, more classically, the probability distributions as functions may be considered elements of a Hilbert space, and a suitable integral based norm there can be used to define a scalar output for $\Delta y$.

The difference function in target space y for definition of $\Delta y$ as used herein may not necessarily be a metric in the mathematical axiomatic sense. For example, some difference functions may not follow the triangular inequality. It may be sufficient for present purposes for the difference function to be real-valued, non-negative and monotonic, such as monotonic-increasing. Convex functions may be considered to define a difference function for $\Delta y$. The Euclidean distance may be squared for example. Other difference functions, such as set theoretic overlap measure, such as the Jaccard index function or similar, may be used instead. Other distance functions still may be contemplated herein, as required.

It will be understood that given the spatial structure of a neural network model in terms of its feature maps and arrangement of parameters as a convolutional filters in different layers the model can be considered a high dimensional data structure having a dimensional structure. Because of the above-described feature for obtaining the contribution map the contribution map in general inherits this dimensional structure of the model M. For example, one or more dimensions measure the distribution of filter coefficients in a given layer, whilst the other dimension extends over the different layers. The same dimensional framework can then be used to define entries therein to so obtain a data structure that represents the contribution map.

However, it is not necessary herein that parameter space $\theta$ has an innate spatial structure in a naturally given dimension. The parameters $p \in \theta$ may be accessed off model M, and may be written (copied) as entries into any dimensional structure, such as vector, matrix or tensor, in any manner or traversal sequence, to so build up a "prototype map". As long is this writing of $p$'s into such a dimensional structure is done consistently over all maps, the proposed processing may be practiced. The prototype map may be an intermediate data structure, having the written-into $p$'s as entries. The corresponding $s(p)$'s may be computed as described in any order to so build up the contribution map C, which inherits the spatio-dimensional structure form the prototype map. Thus, entry $p$ now become $s(p)$ and so forth, until the current map C is established, essentially overwriting the prototype map to obtain C. Retaining the prototype map and copying $s(p)$'s into corresponding entries in a copy of the prototype map to so obtain current (for the considered instance (x,y) ) contribution map $C$ may be done instead, as required.

As mentioned earlier, in the setup-phase, a clustering algorithm of any type, such as $K$-means, may be used to cluster the set of contribution maps {C} as computed herein based on operational data and trusted model M. A cluster distance function $D$ may be configured that measures the distance from each given cluster of contribution maps to any new contribution map $C^d$, C' as encountered in operational phase, such as during deployment of the trusted model M, or when checking whether new model M' can be trusted. Centroids of the clusters can be computed and their distance to centroids of the new map C', $C^d$ may be compared. If there is a given minimum proportion of new maps C',Cd whose distance to at least one trusted map C drops below a trust threshold distance T, ID is established: thus, the model M' is deemed trusted or, when, model M is in deployment, any new deployment data $(\alpha,\beta)$ is deemed ID. Else, if distance does not drop below the trust threshold for the given proportion of new maps C',$C^d$, a case of OOD is deemed established. Thus, two hyper-parameters for the proposed OOD risk check may be required: the said minimum proportion of maps that must satisfy the similarity condition, and a parameter (such as the threshold) that defines the similarity condition. For OOD check of new data vs a given mode, no such proportion definition may be needed, but can still be done if one wishes to establish risk for a set of deployment data collectively.

If the cluster algorithms used define strict boundaries for each cluster and there are thus no overlaps between clusters, the distance measure degenerates into a binary zero/one decision mechanism. Otherwise, a continuous distance measure is constructed that takes the amount of overlap into account and used a probability or other score, instead of binary.

Clustering algorithms other than k-means, may include for example density based clustering approaches, such as "*Density-Based Spatial Clustering of Applications with Noise*" (DBSCAN), as published *by* MEster et al in "A density-based algorithm for discovering clusters in large spatial databases with noise", in Kdd-96 (KDD'96: Proceedings of the Second International Conference on Knowledge Discovery and Data Mining), vol. 96, No34, pp. 226-23, (1996).

The OPTICS clustering algorithm "*Ordering Points To Identify the Clustering Structure*" may also be used in some embodiments, see M Ankerst et al in "OPTICS: Ordering Points To Identify the Clustering Structure", published in the proceedings to ACM SIGMOD international conference on Management of data, ACM Press, ACM SIGMOD Record, vol 28(2), pp. 49-60 (1999).

The above concept of contribution map comparisons does not rest necessarily on clustering. Any other classification methodology, capable or classifying the set of contribution maps into classes (for such the clusters are), are equally envisaged herein in embodiments. In addition, any other method of comparison may be done by a suitable distance/similarity measure *D.* However, clustering is advantageous as it allows saving computational times as not all members of the set of contribution maps may need to be considered one by one each time during operational phase. This may reduce memory and CPU demands. The distance function D for comparison purposes of contribution maps may not necessarily be a metric distance in the mathematical axiomatic sense. Any suitable, non-linear, preferably monotonic function may be used, similar as to what has been observed in connection with the difference function used to define the contribution values $s= s(p)$.

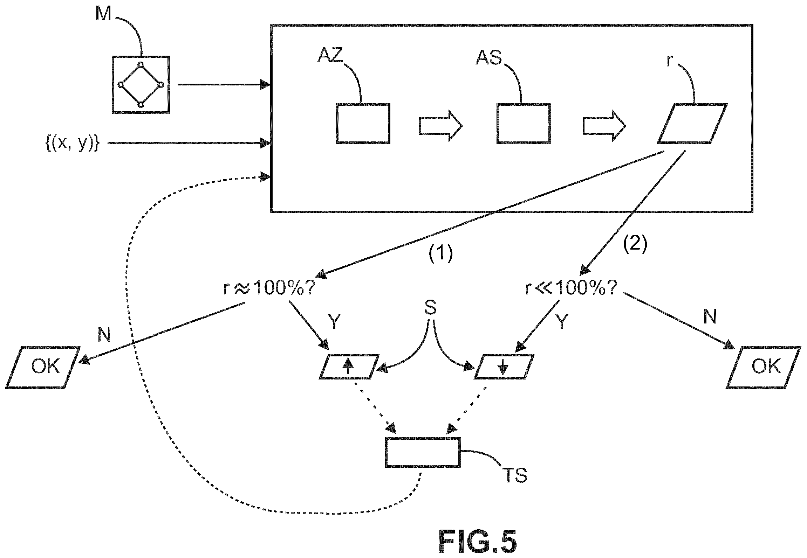

Applications of the above-described contribution maps for other than ID/OOD risk determinations are also envisage herein, such as for fine tuning a given model architecture, or for suggestions to re-train the given model. This will be explained in the following in more detail below at Fig. 5.

In some ML setups, such as in supervised training, the training data is annotated, so it includes an implicit or explicit indication on whether the given instant is a positive (medical configuration is present) or negative (medical configuration is not manifest) instance. However, the proposed management system MS is also applicable for other learning setups, such as unsupervised learning, reinforced learning etc. To the extent that this disclosure makes reference, implicitly or explicitly, to supervised training, this is mainly for illustration only, although in some embodiments such supervised training is indeed envisaged. In particular, any reference above to target, or target space, etc is merely illustrative. What matters herein for present purposes is that at least a part of the model's operational data is known. It may be sufficient to merely supply the input part x of model. The outputs y may then be recomputed as when needed to compute the contribution maps.

Operation of analyzer AZ has been described above in Fig. 3 mainly with reference to operational data *(x,y)* of the trusted model M. But again, this was for illustration only, as is indicated notationally in Fig. 3. The exact some principles as explained above in relation to Fig. 3, in particular the perturbations, etc for computing contribution maps $C^d$, C' apply during deployment when using deployment data $(\alpha,\beta)$, or when using operational data *(x',y')* of the untrusted model M' for ID/OOD determinations, respectively. The above explanation around Fig. 3 is of equal application in setup phase and operational phase.

Also, the concept of contribution maps and their computation is not tied to NNs. Fig. 3 again being a mere illustration, although the use of NNs for models M,M' are indeed envisaged herein in embodiments. Any parameterized machine learning model may be used instead of NNs, such as SVMs, regression type algorithms, etc.

As to the contribution map concept, this is in turn not tied to the clustering approach illustrated above. Indeed, each contribution map can be represented as a point in a high dimensional vector space, the dimension in generally equaling the number of parameters of the parameters set $\theta,\theta'$ of the model M,M', respectively. Thus, contribution map concept as used herein may be thought of as a spatial version of a given ML model's parameter set, and the similarity measure harnesses a geometry of the so "spatialized" parameter set to define a concept of similarity, on which operation of the assessor AS is based. This conceptualization was used above for the clustering algorithm, but may also be used by any other algorithm operable on a vector space, and where a concept of similarity measure can be defined, such as the distance function in the clustering approach. The vector space of which the contribution maps are elements of, is preferably a normed space. The similarity function may thus be based on the Euclidean norm, based on which the similarity can be defined as the Euclidean norm of the vector difference between the contribution maps. Thus, the similarity may be defined as the Euclidean distance. If the distance drops under a given thresholds, the two confidence maps are deemed similar, otherwise they are deemed not similar. Other similarity measures may be defined in terms of the dot product, the cosine between any two confidence maps taken as vectors, etc. Any other norm may be used, instead of the Euclidean. If the similarity measure, as used in the comparison operation of assessor AS, is a distance function, this distance function may not necessarily satisfy all axioms of a mathematical metric. Stochastic similarity measures may be used in other embodiments instead. It may be sufficient herein that the similarity measure is a real-valued, non-negative, and preferably monotonic (such as monotonically increasing) function. Such function can be thresholded to define whether the similarity is sufficient: if the function returns a value lower than the threshold, the two maps are considered similar, else they are deemed not similar.

Whilst the dimension of the contribution map (be it in vector, matrix or tensor form in suitable length, area size (rows by columns), or volume, respectively) may in general equal the number of parameters of the model a mentioned earlier, a more "focused" construction of the contribution map may be considered instead. For example, one may choose to set the focus on only the higher layers' weights in a model, while cropping some parts of the model's weights to spare memory space or processing time for generating the maps C and C', $C^d$. Thus, the total parameter space $\theta$ may be shrunk down to a subset of interest $H \subset \theta$ and it is only for parameters $p \in H$ in such set that the above contribution map is being considered.

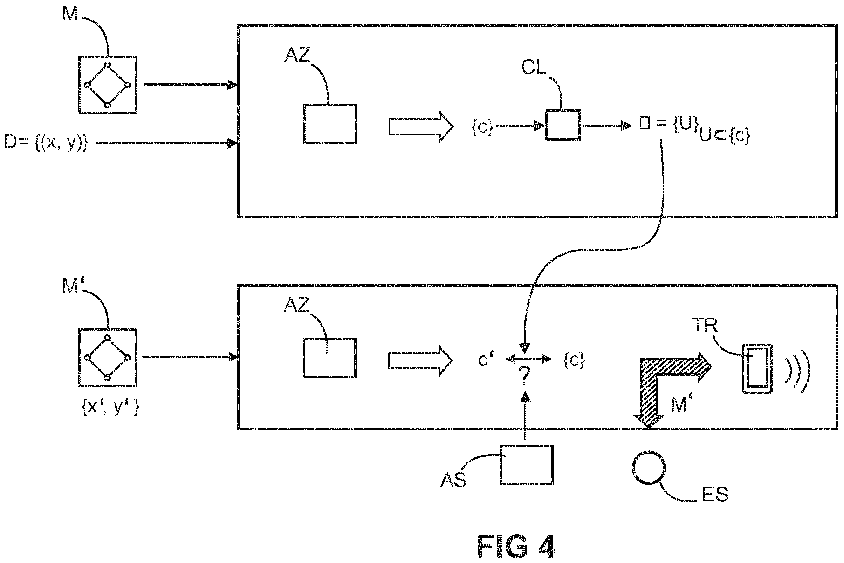

Referring now in more detail to Fig. 4, this shows a block diagram of the OOD risk assessment embodiments of the management system MS mentioned earlier. The analyzer AZ may use the principles described above to compute the set of contribution maps {C} for (trusted) model M, based on its operational data $\{(x,y)\}$. In embodiments, a clusterer CL may then cluster the set of contribution maps into a set of clusters {U}. Thus, each cluster is set of sets, each such set including all those contribution maps that are deemed similar given the distance function D of the underlying clustering algorithm. This operation corresponds to the set up phase for a given trusted machine learning model. This setting of the respective contribution maps can be done for some, preferably each, trusted machine learning model in the eco-system EC.

Later, in operational phase, once the clusters have been so defined, the new, as yet untrusted model M' may be considered, such as acquired from an ML vendor. The question may then arise, such as in a medical setting, whether or not to admit such initially untrusted model M' into the echo system ES, for medical use by client CS or other, as described above. The model may come with its own operational data $\{(x',y')\}$, or at least with its input part $\{x'\}$, on which the said model M' was trained or tested on. Using the same principles as described above, new operational data $\{(x',y')\}$ (or $\{x'\}$) is then fed into the analyzer AZ to produce again, but this time for untrusted model M', a new set of contribution maps {C'}, where the perturbation analysis is done based on $M^\theta{'}('x) = y'$, with auxiliary function now $F_{x',y'}(p') = M^{p'}(x')$, and $p'$ parameters of new model $M'$.

As an extension of the above, one may exchange data x with x' (or vice versa) to check whether such data produces similar clusters of the corresponding C using model M (or C' using model M'). This exchange may be employed as a cross-check on whether data x and x' are equivalent.

Assessor AS may then compare in a comparison operation the two sets of contribution maps {C} and {C'} whether new model M' is indeed trustworthy, in other words, whether the two models M',M are ID or whether there is no OOD risk. The comparison operation may use the clustering algorithm, with prep-computed clusters {U} as reference. Thus, assessor AS may use then use the clustering to compare new contribution maps {C'} to the clusters {U} to establish whether there is sufficient proximity or similarity. If there is, assessor may conclude there is no or low OOD risk, and the models are (likely) ID. Such no OOD risk may be concluded if a sufficient (predefined) proportion Q (such as Q= 20%, 30% or more than 50%) of the new contribution maps {C'} are considered to be sufficiently similar to at least one cluster in the clustering {U} or again for given proportion of such clusters therein. Thus, a similarity condition may be formulated for a pre-set proportion. Such sufficiency of similarity condition may be decided upon by thresholding a similarity value returned by distance function D when measuring distance of any new map C' against the clusters. If, on the other hand, this condition is not met, a transducer TR may operate to issue an alert signal to alert user to such OOD risk finding and suggests that care needs to be taken whether or not to still allow the model M' into the system EC. A message may be sent to a user device CS, or a suitable graphics display including an alert message may be generated by the transducer TR, for display on display device DD. Any other sensory signal may be so generated such as an audio signal, a haptic signal by operating a warning light or any other. In the comparison, the new set of clusters {C'} for untrusted model M' may itself be clustered to form a new clustering {U'}, and it is the new clustering that may be then compared with the old clustering {U}. Distance function D may operate on centroids of clusterings {U, {U'} to establish the said similarity condition, in order to decide on ID vs OOD for new model M'. Instead of using operational data, deployment data $(\alpha,\beta)$ can be used for a given trusted model in order to decide on data vs model ID/OOD as explained earlier, in order to have a measure to what extent output $\beta$ of model M can be trusted. This determination is again contribution map based CD (now based on deployment $(\alpha,\beta)$ data rather than training or test data), and proceeds in same manner as explained for establishing whether new model M' can be trusted. Clustering may or may not be used. In this or any other embodiment above where no clustering is used, distance function D may be used as applied to differences between contribution maps, assuming the contribution maps can be treated as members of a normed vector space. D may then be again a Euclidean distance such as when measuring distance between centroids in clustering. Any other suitable function, even a generalized distance function (non-negative, monotonic, etc, as mentioned earlier in other connection), may be used instead as distance function D to measure similarity between contribution maps in any of the above and below mentioned embodiments of assessor AS.

Reference is now made to Fig. 5, which shows a different embodiment of the management system MS. In this embodiment, the system MS is configured to use the contribution maps in order to facilitate the need for fine-tuning machine model M, given its operational data. As before, the analyzer AZ is operable to produce the set of contribution maps, either clustered or not. Assessor AS then assesses the contribution maps and outputs a value $r$ (eg, score and such it will be referred to herein). This r-score is configured to be indicative on whether or not the model M should be re-trained, or whether it should have its architecture changed. The r-score represents a modeling capacity. It measures the extent to which a parameter is used. The "usage" can be measured based on, or by, the contribution value $s$ of a given parameter, relative to a given operational data instance $(x,y)$. Construction of the contribution maps is as described above at Fig. 3, except that now the use of such contributions maps is different.

In more detail, and as described above, the contribution maps entries s measure the respective importance/-contribution of the corresponding given parameter $p=p0$. An importance/contribution value thresholding can be applied to some, or all, of the entries across the contribution maps to establish a sufficient number of the parameters of the model are actually contributing to the outputs in the operational data. Some parameters may contribute more as per some maps than they do in others. Thus, again, the contribution values s may be thresholded over some or all maps in set {C}, and the outcomes of such thresholding over the some or all maps for the given parameter is recorded: $s^{(x,y)}(p) \overset{?}{\leftrightarrow} T$, $\forall (x, y)$, with "$T$" a threshold, "$\overset{?}{\leftrightarrow}$" a threshold operator ("$>T$" or "$<T$") or other comparison logic, and $(x,y)$ runs over all or some subset of operational data instances $(x,y)$ in the set $\{(x,y)\}$. Thus, logical quantifier "$\forall$" may be restricted to a subset of $\{(x,y)\}$, so it is not a necessity herein to always consider all such comparisons (although this can be done and is indeed envisaged herein in some embodiments). Such restriction may allow saving CPU time. The proportion of instances where the current parameter does satisfy the thresholding condition $\overset{?}{\leftrightarrow}$ is recorded. If this proportion is beyond a quality threshold, the parameters is deemed of sufficient use. This is repeated for all or a subset of parameters. If on the over hand it is so found that a preset proportion of parameters are not used sufficiently as per the proportional thresholding setup as described above, the model may be said not to run to capacity, and this may be flagged up, eg by displaying or otherwise issuing a corresponding notification to user. Thus, unnecessary computational overhead may be reduced in the model, Thus, the model may have too many connections and/or layers that are not necessary for the given task. The, eg NN type, model M can thus be pruned down by having some of its connections severed, or some of the layers removed to obtain a smaller model which can run faster producing high throughput during deployment. This is welcome in a busy clinical environment for example or in automotive setting, where a quick decision is needed. It will be appreciated that the given parameter may have different importance values across the different contribution maps differing from operational data instance to another.

Thus, the thresholding may be done across multiple or all the maps and a two-fold thresholding may be done: one on the contribution value of a given parameter as in some or each map, and another thresholding considers the proportion of maps for which the contribution value has exceeded the threshold, or otherwise meets the condition of interest. If the condition is met in a sufficient proportion of maps, the parameter is considered to be important or to have sufficient contribution. If it does not, the parameter is considered to be of less import. Thus, adjusting the model architecture is one way to fine tune the model. However, another is to re-train the model based on improved, new, training data that includes examples of a larger variation. So rather than reducing model architecture, the model is retrained on a larger or more varied set, in the hope that after such re-training more of the parameters will be used, thus reducing dormant regions in the parameter set/architecture. This allows the model to use more parameter, thus it may be able to generalize better. The decision on which of the two options, re-training or architecture adjustment, is to be used may rest with the user.

For the above purposes, it is the question whether or not a sufficient number of contribution parameters have been found to be beyond the threshold or meet the pre-set condition. For example, as illustrated in the lower part of Fig. 5, r-score arm may be computed as the global proportion of parameters that meet the preset-condition. The preset condition may be formulated in terms of the above mentioned two-fold thresholding for each parameter, such as all parameters that are in scope of the assessment by assessor AS. This may include the whole of the parameters set $\theta$ or parts of it, eg in order to save time. If the proportion is for example about *100%-m< r <100% +m, (m>0)* within a safety margin $m$, the model may be considered good, in no need for tuning. If on the other hand, the fraction is closer to 100%, *r > 100%-m*, this may be an indication to increase the network capacity. Thus, the two limbs (1), (2) in Fig. 5 represent two different tests, with the left limb (1) checking r being about 100%, whilst the right limb (2) checks for r substantially lower than 100%, off by a margin of more than m. The margin may be set by experimenting and may differ from model type, etc.

The model may then be passed through a training system TS for re-training, testing or repeat analysis. If, on the other hand, the fraction is found to be way less than 100%, *r < 100%-m*, this may be an indication that the network capacity could be reduced for, example by removing layers and/or connections. The so proposed network capacity analysis may be augmented by visualizing the thresholded contribution maps. Each contribution map may be considered on its own. No clustering is needed for this embodiment although this can still be done in alternative arrangements.

As mentioned earlier, the operational embodiments illustrated in Figs 4,5 may operate on a lumped parameter set to save CPU time.

The visualization of the thresholded one or more of the clustered contribution maps may be done for example, by heat map rendering, where the color coding varies with magnitude of proportion. The r-scores may be mapped for each parameter onto a grid having size and dimension of any one of the contribution map. Thus, regions (a set of parameters) "of importance" in the model M (such as of the NN-type) are clearly distinguishable visually from those that are more dormant, thereby providing an intuitive and easy to use tool for software developers engaged in fine tuning of an existing stock of machine learning models.

The above described "within-maps thresholding" inherently provided a localization of "bad" parameters, that is, in can be established which parameters are not used sufficiently. Some or all of the c-maps that include such dormant parameters may be visualized. Because each contribution map may be understood as a spatialized version of the parameter set of the model M,M' being investigated, the visualization can help the user locate which parameters are dormant, and hence which proportion of the model may benefit from a redesign.

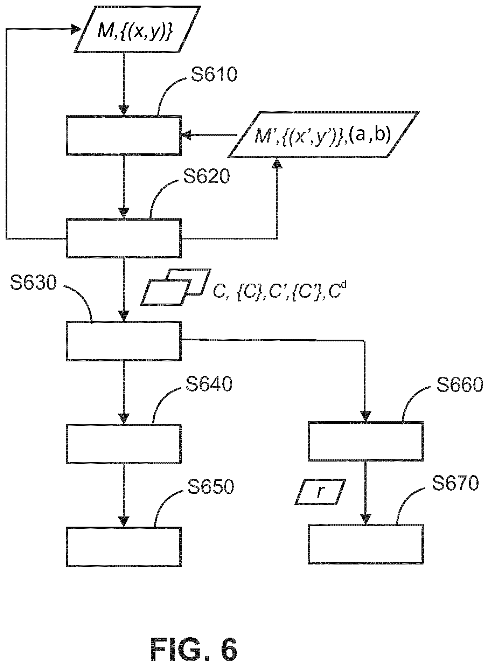

Reference is now made to Fig. 6 which shows a flow chart of computer implemented method, summarizing the principles described above. Thus, the method is one of facilitating assessing one or more trained machine learning models.

It may be noted however, that the proposed method for facilitating, or operating one or more machine learning models may not necessarily be tied to the architectures described above, but may be considered instead as a teaching of its own right. Consistent with the above, the method may be thought to proceed in two phases, in the set-up phase and in the use/operational phase.

In the set-up phase, the set of contribution maps{$C$} are built up first, for a known, trusted model(s), and these maps may then be used to for OOD risk assessment, such as comparing with contribution maps of a new model M', or in respect of new deployment data ($\alpha,\beta$) for the known model, or may be used for assessing needs of fine tuning for any machine learning model M,M', trusted or not, as explained above in Fig. 5.

Thus, at step S610 the given, known, trusted machine learning model M is received, including its operational data *(x,y)* on which model M was trained and/or tested. Such received model M may hail from an existing stock of approved or validated models, such as, for example, the services echo system ES above in Fig. 1. In receiving this model, its parameters become accessible and may be loaded one-by-one, in batches, or at once into memory of a data processing arrangement, such as the said management service/device MS. It may be sufficient to merely receive the set of operational input data {$x$} as the output part y may be computed by $M(x) = y$. A suitable set of APIs (application program interface)may be needed to so access a possibly proprietary model's parameters. Looping over nodes may be needed to read-out parameters $p$.

At step S620 a contribution map is computed for an operational data instance ($x,y$), and one for some or all of the parameters of the model M, for example as described above herein at Fig. 3. Step S620 may be repeated for each or some of the operational data instances, to build up the set of reference contribution maps {C}.

The set {$C$} of contribution maps is then provided for further processing, if required.

For example, in an optional step S630, the set {C} may be clustered into clusters of contribution maps. Such clustering may facilitate efficiency in computational processing, such as in a comparison operation (on which more below), The clustering step may include configuring a suitable distance function that allows measuring similarity or distance to the existing clusters. A binary function may be used if there is good separation between clusters.

Steps S620, and, optionally, step S630, may represent the setup phase, prior to the operational/use phase.

The operational phase may include further processing such as an OOD risk assessment of a new (as yet untrusted) model M.

In this embodiment, the new model M' is considered, with its operational data ($x$, '$y$'). Specifically, one or more new contribution maps C' are computed by a repeat of the above at step S620, but this time based on new data including the new operational data and ($x',y'$) the new model M', now receivable at step S610. Thus, now, the new model M' with its operational data {($x',y'$)}is used to compute the new set of one or more contribution maps {C'} for the new model M', corresponding to some of all of the new operational data instances {($x',y'$)}. Again, receiving at step S610 of the model M' may include access to its parameters. And, again as before, it may be sufficient to receive merely input parts {$x'$} of the operational data. The operational output data parts y' may then be computed as $y' = M'(x')$.

For the OOD risk assessment, at step S640, the new one or more contribution maps C' of the untrusted model M' is compared with the one or more contribution maps of the reference trusted model M. The optional clustering representation of the maps may be used to facilitate this comparison. If clustering is used, such clustering may also be applied to the new clustering maps to define a clustering there. Using the distance function, centroids of the two clusterings may be computed to aid the comparison.

Whether to not clustering operation S630 is used, the comparison operation S640 is to establish whether there is sufficient similarity between the one or more contribution maps {C}of the trusted model and the one or more contribution maps {C'} of the trusted model.

Thus, a decision is made based on the comparing step S640 whether the contribution maps are {C}, {{C'} are sufficiently similar. If the is such similarity established, the models M,M' are deemed ID and there is no OOD risk or such risk is low. If there is no similarity for a given proportion, this may indicate OOD risk.

At step S650, in indication signal of the decision on the comparison is made available for further processing, such as displaying, generating any other notification, storing, or issuing a signal to have the formerly untrusted new model M' now be considered trusted, and be admitted into an existing set ("eco system") of trusted models that may have already included the initial trusted model M. If on the other hand the comparison S640 reveals there is no sufficient similarity, the model remains untrusted, may not be admitted to the eco system and the indicator signal at step S650 may indicate this finding of positive OOD risk.

Thus, the proposed method may be considered a computerized validation or vetting setup for new models with unknown operational data.

In another embodiment, the OOD risk S640 is assessed of a given model, such as the trusted model M, relative to new deployment data $(\alpha,\beta)$, $M(\alpha) = \beta$. The same can be done for any model, trusted or not M'. This embodiment of the method uses the exact same steps S610-S650 as above for the trusted model vs untrusted model M' OOD risk assessment, except that now the contribution map is computed for the new deployment data $(\alpha,\beta)$ and the model M, and this new contribution map $C^d$ is compared to the one or mor contribution maps {C} of the trusted model M. If there is similarity as per the comparison step S640, the new deployment data $(\alpha,\beta)$ is deemed ID and the model output $\beta$ (such as prediction of a presence of a medical condition, given medical image $\alpha$ of patient) is deemed trusted. If there is no similarity as per the comparison step S640, the new deployment data $(\alpha,\beta)$ is deemed OOD and the model output $\beta$ is not trusted. Again, indicator step S650 may indicate either finding,

In a third embodiment of the method, the contribution maps of model M (or of any model, whether trusted or not), may be used for model tuning.

Thus, the contribution maps {C} may be used to judge whether the model runs to capacity given its operational data, and whether i) a re-training of model M based on more varied operational data, or ii) an adaptation of the model M's architecture may be called for. No clustering is needed, and no second model may need be considered in this embodiment. This model tuning support embodiment may include step S660 where the one or more contribution maps {C} are thresholded, in order to establish, considering all or a subset of the contribution maps {C}, the proportion of parameters that are actually contributing to the respective outputs more than a given contribution threshold.

Based on the established proportion as per step S660 of such contributing parameters, a re-training and/or architecture adaptation may be suggested, and this is indicated at step S670, such as by displaying or other.

Whilst the method and system MS herein has been explained with reference to one trusted model, it may be appreciated that the method is readily applicable to more than one trusted model.

Broadly, if there is low usage of parameters, as may be established at S660 by thresholding s values in some or all contribution maps {C}, the model capacity may be too large. This may slow down computation when using model in deployment. Thus, the model may be made smaller, with fewer parameters. Alternatively, it may be suggested to retrain the model using a training data set with more variation to make better use of the dormant parameters.

Referring back to the contribution map building step S620 in more detail, in this operation a given parameter position, as $p0$, in the model M (reference is made herein to trusted model M, but the same principles may be applied to the other model M') is accessed and varied by applying to a considered position p0 a suitable perturbance $\Delta p$ in one or more steps. In so doing, the model M is reapplied to the same given training data instance input x. Input x is fed through the model M, but now with its parameter set at p0 perturbed, to yield in general a different output $\Delta y$, also perturbed. If $y$ is an element in a normed vector space, the output perturbation $\Delta y$ is a number so that a ratio can be formed $\Delta y/\Delta x$, or its inverse, or any equivalent or function of either, in order to measure the sensitivity $s(p0)$ for the current parameter $p0$ under consideration. Such sensitivity s may be taken as one possible definition of the parameter's contribution to the output y, although other formulations are not excluded herein. As said, more than once such perturbance instance can be applied to the considered location in $p0$ to obtain a corresponding set of sensitivity values $s^j$ at position $p0$. These $s^j$ can then be averaged, weighted-averaged, or may be otherwise combined to obtain a single, well-defined contribution values $s(p0)$ for parameter position $p0$, and the considered operational data instance (x, y), and thus for the current map $C=C^{x,y}$.

The method may then proceed to a next parameter $p0'$ in a loop, and the above sub-steps based on perturbances are repeated, and so on, to so build up an instance of a contribution map for the given operational data instance (x,y). Once all parameter positions of interest (this is may be a subset H of $\theta$) are so processed, the next operational data instance is considered to build up the next map, and so on to obtain the set {C}of contribution maps for model M. Thus, at least two, optionally three, nested loops may be envisaged to practice the proposed method: one, outer, loop over the training instances $(x,y)$, and the next loop over the parameters. A third loop may be used to effect the application of the respective perturbance, if more than one is to be applied, by varying the parameters, eg, by applying increments $+/\Delta p$, in order or at random. The nesting order of said loops may be varied, the nesting order being an illustration of one embodiment of contribution map building.

The proposed concept of contribution maps may also be used to estimate overfitting of the models whose contribution maps are computed. This because the distribution of contributions across the model's architecture as per the contribution maps has been found to correlate with instances of overfitting, such as in neural network type models. For example, the number of contributing neurons especially in the higher layers (away from input layer IL, and more proximal to output layer OL, see Fig. 3; thus, layer $L_j$ is higher than $L_k$, for $j>k$) should be significantly lower compared to non-overfitted scenarios. Thus, in case of an overfitted network M in respect to a certain input, visualization of the corresponding c-map thus might appear more sparse in higher layers.

The components of the management system MS, or of the data processing arrangement DPA more generally, may be implemented as one or more software modules, run on one or more general-purpose processing units PU, or on one or more server computers associated in a computing cloud or other network.

Alternatively, some or all components of the management system MS, or of the data processing arrangement DPA more generally, may be arranged in hardware such as a suitably programmed microcontroller or microprocessor, such an FPGA (field-programmable-gate-array) or as a hardwired IC chip, an application specific integrated circuitry (ASIC), integrated into a medical device such as an imaging apparatus or other. In a further embodiment still, the management system MS, or the data processing arrangement DPA more generally, may be implemented in both, partly in software and partly in hardware.

Different components of the management system MS, or of the data processing arrangement DPA more generally may be implemented on a single data processing unit HW. Alternatively, some or more, such as all, such components are implemented on different processing units HW, possibly remotely arranged in a distributed architecture and connectable in a suitable communication network such as in a cloud setting or client-server setup, etc.

One or more features described herein can be configured or implemented as or with circuitry encoded within a computer-readable medium, and/or combinations thereof. Circuitry may include discrete and/or integrated circuitry, a system-on-a-chip (SOC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus or system or arrangement. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM or any other storage medium, is presented wherein the computer readable medium has a computer program element stored on it which computer program element is described by the preceding section.

A computer program may be stored and/or distributed on a suitable storage medium (in particular, but not necessarily, a transitory or a non-transitory storage medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into a working memory of a data processing system (computer, laptop, etc) from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope. Such reference signs may be comprised of numbers, of letters or any of alphanumeric combination.

**Claims**

1. System (SYS, MS) for facilitating an assessment operation in relation to a trained machine learning model, comprising:

   an input interface (IN) capable of receiving i) one of more parameters of the trained machine learning model (M), and ii) output data producible by the trained model (M), in response to input data processable by the trained model (M), and
   an analyzer component (AZ) capable of computing, based on the output data, a contribution value per model parameter, wherein the said contribution value per parameter is configured to measure, given the input data, a respective contribution to the output data of the respective one of the one or more parameters,
   wherein the one or more contribution values form a contribution map for the trained model given the input data, and the analyzer capable of providing the contribution map for the said assessment operation in relation to the trained model (M).

2. System of claim 1, further including a visualizer component (VIZ) configured to generate a visualization of the contribution map on a display device (DD).

3. System of any one of the preceding claims, wherein a) the input data is part of training data or test data on which the model was trained or tested, and/or b) wherein the input data is medical data including any one or more of: i) imagery, ii) laboratory data, iii) patient record, and/or c) wherein the output data includes any one of more of: control data for medical equipment, diagnostic data, therapy data, segmented image data, image registration data.

4. System of any one of the preceding claims, wherein the system (SYS) is capable to so analyze the machine learning model, given a plurality of input data instances and/or related output data instances, to obtain a plurality of contribution maps, including the said contribution map, at least one such map per input data or output data instance for the said machine learning model.

5. System of any one of the preceding claims, wherein an assessor (AS) of the system is capable to assess the trained model based on thresholding at least one contribution value in the map, or in the plurality of maps.

6. System of claim 5, wherein the assessor (AS) capable to assess, based on the thresholding, for i) a recommendation of the model to be retrained, and ii) for a recommendation to modify an architecture of the machine learning model.

7. System of any one of the preceding claims 1-4, wherein the assessor (AS) of the system is capable to assess an out-of-distribution risk for a new input data instance ($\alpha$), not from among the data on which the model was trained or tested on, wherein the assessor (AS) is capable to so assess, based on comparing, in a comparison operation, the contribution map, or the plurality of contribution maps, against a new contribution map provided by the analyzer for the machine learning model given the new input data instance.

8. System of any one of the preceding claims 1-4, wherein the system includes an assessor (AS) capable to assess a compatibility of a new machine learning model (M') tested or trained on new training or test data different from training or test data for the machine learning model, the assessor (AS) capable to so assess, based on comparing, in a comparison operation, the contribution map, or the plurality contribution maps, for the machine learning model against a new contribution map, or plurality of new contribution maps, provided by the analyzer for the machine learning model (M) or the new machine learning model (M'), given the new training or test data as new input data and/or output data instances.

9. System of any one of the preceding claims, the assessor (AS) capable of admitting, based on the assessment operation, the new machine learning model (M') into a pool (EC) of already assessed one or more machine learning models, including the said machine learning model.

10. System of any one of claims 7 -9, wherein the comparison operation is based on a clustering algorithm.

11. A computing arrangement, including a system (MS) of any one of the preceding claims, and at least one storage medium on which is stored at least one or more i) at least a part of the machine learning model (M), ii) at least a part of the new machine learning model (M'), iii) at least a part of the training or test data of the machine learning model (M), or of the new machine learning model (M').

12. Computer-implemented method of facilitating an assessment operation in relation to a trained machine learning model, comprising:

   receiving (S610) i) one of more parameters of the trained machine learning model (M), and ii) output data producible by the trained model (M), in response to input data processable by the trained model (M), and computing (S610), based on the output data, a contribution value per model parameter, wherein the said contribution value per parameter is configured to measure, given the input data, a respective contribution to the output data of the respective one of the one or more parameters, wherein the one or more contribution values form a contribution map for the trained model given the input data, and the analyzer capable of providing the contribution map for the said assessment operation in relation to the trained model (M).

13. A computer program element, which, when being executed by at least one processing unit, is adapted to cause the processing unit (SYS) to perform the method as per claim 12.

14. At least one computer readable medium having stored thereon the program element of claim 12, or having stored thereon, the machine learning model and/or the test or training data on which the machine learning model was tested or trained.

15. Use of one or more parameters a machine learning model and its test or training data to compute a contribution map, wherein the said contribution map includes contribution value per model parameter, wherein the said contribution value per parameter is configured to measure, given input data, a respective contribution to output data of the respective one of the one or more parameters, the input and output date being part of the test or training data.

**FIG. 1**

**FIG. 2**

**FIG. 3**

**FIG 4**

FIG.5

$M,\{(x,y)\}$

S610

$M',\{(x',y')\},(a,b)$

S620

S630

$C, \{C\}, C', \{C'\}, C^d$

S640

S660

S650

$r$

S670

# FIG. 6

| | Europäisches Patentamt<br>European Patent Office<br>Office européen des brevets | **EUROPEAN SEARCH REPORT** | Application Number<br>**EP 23 18 0497** |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | INGLIS ALAN ET AL: "vivid: An R package for Variable Importance and Variable Interactions Displays for Machine Learning Models",<br>THE R JOURNAL, [Online]<br>vol. 15, no. 2,<br>20 October 2022 (2022-10-20), pages 344-361, XP093112522,<br>ISSN: 2073-4859, DOI: 10.32614/RJ-2023-054<br>Retrieved from the Internet:<br>URL:https://arxiv.org/pdf/2210.11391v1.pdf<br>><br>[retrieved on 2023-12-15]<br>* abstract *<br>* page 2 – page 15 * | 1-15 | INV.<br>G06N5/045<br>G06N20/00 |
| A | MOLLEL RACHEL STEPHEN RACHEL MOLLEL@STRATH AC UK ET AL: "Using explainability tools to inform NILM algorithm performance a decision tree approach",<br>PROCEEDINGS OF THE 5TH INTERNATIONAL WORKSHOP ON P4 IN EUROPE, ACMPUB27, NEW YORK, NY, USA,<br>9 November 2022 (2022-11-09), pages 368-372, XP058972261,<br>DOI: 10.1145/3563357.3566148<br>ISBN: 978-1-4503-9936-4<br>* the whole document * | 1-15 | |
| | | | TECHNICAL FIELDS<br>SEARCHED (IPC)<br><br>G06N |

The present search report has been drawn up for all claims

| Place of search | Date of completion of the search | Examiner |
|---|---|---|
| The Hague | 15 December 2023 | Tsakonas, Athanasios |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. M. MITCHELL**. Machine Learning. McGraw-Hill, 1997, 1, 6
- **MESTER et al.** A density-based algorithm for discovering clusters in large spatial databases with noise. *KDD'96: Proceedings of the Second International Conference on Knowledge Discovery and Data Mining*, 1996, vol. 96 (34), 226-23

- OPTICS: Ordering Points To Identify the Clustering Structure. **M ANKERST et al.** the proceedings to ACM SIGMOD international conference on Management of data. ACM Press, 1999, vol. 28, 49-60